# EUROPEAN PATENT SPECIFICATION

(11) **EP 2 893 281 B1**
(45) Date of publication and mention of the grant of the patent: **02.10.2019**
(21) Application number: 13816272.2
(22) Date of filing: 08.07.2013
(51) Int. Cl.: F28F 3/00

(54) **ENHANCED-EFFICIENCY ENERGY RECOVERY VENTILATION CORE**
BELÜFTUNGSKERN MIT EFFIZIENTERER ENERGIERÜCKGEWINNUNG
C UR DE SYSTÈME DE VENTILATION À RÉCUPÉRATION D'ÉNERGIE À RENDEMENT ACCRU

(30) Priority: 11.07.2012 US 201213546633
(43) Date of publication of application: 15.07.2015
(73) Proprietor: Kraton Polymers U.S. LLC, Houston, Texas 77084 (US)
(72) Inventor: TAN, Kuitian, Katy, Texas 77494 (US)
(74) Representative: Henkel, Breuer & Partner
(86) International application number: PCT/US2013/049559
(87) International publication number: WO 2014/011535

(56) References cited:
- US-A1- 2009 098 432
- US-A1- 2011 146 941
- US-A1- 2012 073 791

## Description

### Field of the Invention

The present disclosure relates to rigid or semi-rigid frames for use in an energy recovery ventilation core unit. In particular, the present disclosure relates to application of a frame bonded with a moisture permeable film made from a sulfonated block copolymer for providing greater direct contact of air streams with the film. The sulfonated block copolymer has at least two polymer end blocks that contain little or no sulfonic acid or sulfonate functionality and at least one polymer interior block which contains an effective amount of sulfonic acid or sulfonate functionality. The frame can be a porous sheet allowing the passage of a gas such as air thereby providing a more direct contact with the moisture permeable film. The present disclosure further relates to an enhanced-efficiency energy recovery ventilation unit having a core which employs such frames.

### Background of the Invention

It is well known that heating and cooling systems are employed for temperature control of buildings and various housing. In such systems fresh air will be ushered from outside of the building or house while stale air from within will be exhausted outdoors. Generally, a large amount of energy is expended in such cooling and heating systems. One way to conserve the cost for this expenditure of energy is by exchanging some of the heat and moisture between the air streams as they are entering and exiting the structure.

Accordingly such systems for exchanging the heat and humidity of the air streams have come to be known as energy recovery ventilation (ERV) systems. ERV involves the sensible and latent heat exchange of exhaust inside air with fresh outdoor air. The basis for such exchange is that the exhaust air flow and the intake airflow will possess different water vapor pressures and will furthermore be at different temperatures. For example, in summer if the intake airflow is warm and humid, energy is recovered by exchanging both the sensible heat and the latent heat with the cool and low humidity exhaust air. Alternatively, in winter, if the outdoor air is cold and dry, energy is recovered by exchanging both the dry cold air with the warmer, more humid exhaust air.

ERV systems are usually employed in conjunction with a heating and/or cooling system, and are made up of a device having an ERV core unit. The core unit is generally comprised of various stacked membranes separated by some type of spacer. The intake and exhaust air streams are transported to the core unit and made to pass by one another without intermixture on each side of the stacked plates generally in an alternating cross flow pattern.

Sensible heat exchange is generally simpler to accomplish since a thin layer may transfer heat rather easily. On the other hand, latent heat transfer is affected by the change in moisture between the air streams and provides a more effective heat exchange. Heat recovery ventilation (HRV) refers to systems which provide sensible heat exchange because there is no moisture exchange between two intake and exhaust air streams. ERV systems however provide a membrane allowing for the transfer of moisture between the two air streams thus taking advantage of both sensible and latent heat exchange properties.

An example of an ERV system is disclosed in US Publication No. 2012/0073791. Disclosed therein is a core for an energy recovery system which employs a fibrous microporous support substrate and a sulfonated block copolymer laminated thereon. The sulfonated block copolymer is impermissible to air but allows the efficient water vapor transport and thus provides very advantageous heat exchange properties. The microporous support permits air passage while also providing mechanical support for the sulfonated block copolymer. Spacers are employed so as to enable stacking of the membranes and separating air streams in formation of the ERV core.

As identified by the inventor herein, what is needed is a way for greater contact of the air stream with the moisture permeable membrane for more efficient water transfer between intake and exhaust streams.

A multilayer structure having the features in the preamble of claim 1 is disclosed for example in US 2012/0073791.

### Summary of the Invention

The invention is a multilayer composite structure as defined in claim 7, an energy recovering system having the multilayer composite structure as defined in claim 1 and a process for converting a heat recovery ventilation system as defined in claim 11.

### Brief Description of the Drawings

FIGS. 1a, 1b, and 1c illustrate three different polymeric extruded netting frames;
FIGS. 2a, 2b, 2c illustrate three different perforated aluminum plates;
FIG. 3. illustrates a non-woven cellulosic substrate;
FIG. 4 illustrates sintered porous substrate;
FIG. 5 illustrates a perspective view of an ERV core unit;
FIG. 6 illustrates one configuration embodiment of a layer in an ERV core;
FIG. 7a illustrates one configuration embodiment of a layer in an ERV core;
FIG. 7b illustrates one configuration embodiment of a layer in an ERV core;
FIG. 8a illustrates one configuration embodiment of a layer in an ERV core;
FIG. 8b illustrates one configuration embodiment of a layer in an ERV core;
FIG. 9 illustrates one configuration embodiment of a layer in an ERV core;
FIG. 10a illustrates one configuration embodiment according to the present invention of a layer in an ERV core;
FIG. 10b illustrates one configuration embodiment according to the present invention of a layer in an ERV core;
FIG. 10c illustrates one configuration embodiment according to the present invention of a layer in an ERV core;
FIG. 11a illustrates one configuration embodiment of a layer in an ERV core;
FIG. 11b illustrates one configuration embodiment of a layer in an ERV core;
FIG. 12a illustrates crimping adjacent frame layers;
FIG. 12b illustrates crimping adjacent frame layers;
FIG. 13 illustrates experimental results regarding energy exchange.

### Detailed Description of the Invention

A detailed description of embodiments of the present invention is disclosed herein; however, it is to be understood that the disclosed embodiments are merely exemplary, and that the invention is defined by the claims. Therefore, specific structural and functional details which are addressed in the embodiments disclosed herein are not to be interpreted as limiting, but merely as a basis for the claims and as a representative basis for teaching one skilled in the art to variously employ the present invention.

Unless specifically stated otherwise, all technical terms used herein have the meaning as commonly understood by those skilled in the art.

Moreover, unless specifically stated otherwise, the following expressions as used herein are understood to have the following meanings.

Unless specifically stated otherwise, the expression "coated" or "coating" means the application or bonding of a polymer in solution or liquid form to a substrate or other material where the polymer will be either on the substrate surface or embedded in between the substrate structure.

In contrast to "coated," unless specifically stated otherwise, the expression "lamination" means the application or bonding of a cast polymer membrane or polymer film to a substrate or other material.

The term "bonded," or "bonding" encompasses attachment of a polymer to a substrate or other material either by coating or lamination or other means, whereby a bond is formed between a polymer membrane and the substrate or other material.

It will be understood by those skilled in the art that the term film "disclosed" herein may also be referred to as a membrane which is moisture permeable but air impermeable.

Disclosed herein is an enhanced-efficiency ERV system for the exchange of sensible and latent heat between an intake airflow stream and an exhaust airflow stream (hereinafter "air streams" referring to both intake and exhaust streams). The ERV systems employ a moisture permeable but air impenetrable film along in connection with rigid or semi-rigid frame which enable greater contact of the air streams in the ERV core. The frames can be formed into shapes such as a corrugated form and can be porous. The moisture permeable film can be bonded to the frames as well as a support substrate.

In further embodiments, the film can be bonded to a rigid or semi-rigid frame to form a multilayer structure which can be formed into various shapes, including corrugated patterns. Such embodiments can also include converting an HRV unit into an ERV unit. In such cases the HRV moisture impermeable spacers or frame can be removed to input the multilayer moisture permeable but air impenetrable multilayer structures, and alternately, a porous rigid or semi-rigid frame disclosed herein to form an ERV core.

In various embodiments, the ERV core disclosed herein can include several components, including and (1) sulfonated block copolymer film, (2) rigid or semi-rigid frame, (3) membrane substrate, (4) spacers.

### Energy Recovery Ventilation Components

### Sulfonated block copolymer film

The polymeric film or use in the ERV unit as disclosed herein is composed of or includes a sulfonated block copolymer. In some embodiments, the compositions of the present disclosure include the sulfonated block copolymers described in US 7,737,224 to Willis et al. Furthermore, the sulfonated block copolymers, including those described in US 7,737,224, may be prepared according to the process of WO 2008/089332 to Dado et al. or the process of US 8,012,539 to Handlin et al.

### 1. Sulfonated Block Copolymers

The block copolymers needed to prepare the sulfonated block copolymers may be made by a number of different processes, including anionic polymerization, moderated anionic polymerization, cationic polymerization, Ziegler-Natta polymerization, and living chain or stable free radical polymerization. Anionic polymerization is described below in more detail, and in the referenced documents. Moderated anionic polymerization processes for making styrenic block copolymers are disclosed, for example, in US 6,391,981, US 6,455,651 and US 6,492,469, each of which is incorporated herein by reference. Cationic polymerization processes for preparing block copolymers are disclosed, for example, in US 6,515,083 and US 4,946,899, each of which is incorporated herein by reference.

Living Ziegler-Natta polymerization processes that can be used to make block copolymers were recently reviewed by G.W. Coates, P.D. Hustad, and S. Reinartz in Angew. Chem. Int. Ed., 41, 2236-2257 (2002); a subsequent publication by H. Zhang and K. Nomura (J. Am. Chem. Soc., Comm., 2005) describe living Ziegler-Natta techniques for making styrenic block copolymers specifically. The extensive work in the field of nitroxide mediated living radical polymerization chemistry has been reviewed; see C.J. Hawker, A.W. Bosman, and E. Harth, Chem. Rev., 101(12), 3661-3688 (2001). As outlined in this review, styrenic block copolymers can be synthesized by living or stable free radical techniques. Nitroxide mediated polymerization methods are preferred living chain or stable free radical polymerization processes when preparing the precursor polymers.

### 2. Polymer Structure

One aspect of the disclosure relates to the polymer structure of the sulfonated block copolymers. In one embodiment, the neutralized block copolymers have at least two polymer end or outer blocks A and at least one saturated polymer interior block B wherein each A block is a polymer block which is resistant to sulfonation and each B block is a polymer block which is susceptible to sulfonation.

Preferred block copolymer structures have the general configuration A-B-A, (A-B)n(A), (A-B-A)n, (A-B-A)nX, (A-B)nX, A-B-D-B-A, A-D-B-D-A, (A-D-B)n(A), (A-B-D)n(A), (A-B-D)nX, (A-D-B)nX or mixtures thereof, where n is an integer from 2 to about 30, X is coupling agent residue and A, B and D are as defined hereinafter.

Most preferred structures are linear structures such as A-B-A, (A-B)2X, A-B-D-B-A, (A-B-D)2X, A-D-B-D-A, and (A-D-B)2X and radial structures such as (A-B)nX and (A-D-B)nX where n is 3 to 6. Such block copolymers are typically made via anionic polymerization, stable free radical polymerization, cationic polymerization or Ziegler-Natta polymerization. Preferably, the block copolymers are made via anionic polymerization. It will be understood by those skilled in the art that in any polymerization, the polymer mixture will include a certain amount of A-B diblock copolymer, in addition to any linear and/or radial polymers. The respective amounts have not been found to be detrimental.

The A blocks are one or more segments selected from polymerized (i) para-substituted styrene monomers, (ii) ethylene, (iii) alpha olefins of 3 to 18 carbon atoms; (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof. If the A segments are polymers of 1,3-cyclodiene or conjugated dienes, the segments will be hydrogenated subsequent to polymerization of the block copolymer and before sulfonation of the block copolymer.

The para-substituted styrene monomers are selected from para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene and mixtures of the above monomers. Preferred para-substituted styrene monomers are para-t-butylstyrene and para-methylstyrene, with para-t-butylstyrene being most preferred. Monomers may be mixtures of monomers, depending on the particular source. It is desired that the overall purity of the para-substituted styrene monomers be at least 90%-wt., preferably at least 95%-wt., and even more preferably at least 98%-wt. of the desired para-substituted styrene monomer.

When the A blocks are polymer segments of ethylene, it may be useful to polymerize ethylene via a Ziegler-Natta process, as taught in the references in the review article by G.W. Coates et al, as cited above, which disclosure is herein incorporated by reference. It is preferred to make the ethylene blocks using anionic polymerization techniques as taught in US 3,450,795, which disclosure is herein incorporated by reference. The block molecular weight for such ethylene blocks will typically be between about 1,000 and about 60,000.

When the A blocks are polymers of alpha olefins of 3 to 18 carbon atoms, such polymers are prepared by via a Ziegler-Natta process, as taught in the references in the above-cited review article by G.W. Coates et al. Preferably, the alpha-olefins are propylene, butylene, hexane or octane, with propylene being most preferred. The block molecular weight for each of such alphaolefin blocks typically is between about 1,000 and about 60,000.

When the A blocks are hydrogenated polymers of 1,3-cyclodiene monomers, such monomers are selected from the group consisting of 1,3-cyclohexadiene, 1,3-cycloheptadiene and 1,3-cyclooctadiene. Preferably, the cyclodiene monomer is 1,3-cyclohexadiene. Polymerization of such cyclodiene monomers is disclosed in US 6,699,941, which disclosure is herein incorporated by reference. It will be necessary to hydrogenate the A blocks when using cyclodiene monomers since non-hydrogenated polymerized cyclodiene blocks are susceptible to sulfonation. Accordingly, after synthesis of the A block with 1,3-cyclodiene monomers, the block copolymer will be hydrogenated.

When the A blocks are hydrogenated polymers of conjugated acyclic dienes having a vinyl content less than 35 mol percent prior to hydrogenation, it is preferred that the conjugated diene is 1,3-butadiene. It is necessary that the vinyl content of the polymer prior to hydrogenation be less than 35 mol percent, preferably less than 30 mol percent. In certain embodiments, the vinyl content of the polymer prior to hydrogenation will be less than 25 mol percent, even more preferably less than 20 mol percent, and even less than 15 mol percent with one of the more advantageous vinyl contents of the polymer prior to hydrogenation being less than 10 mol percent. In this way, the A blocks will have a crystalline structure, similar to that of polyethylene. Such A block structures are disclosed in US 3,670,054 and in US 4,107,236, each of which disclosures is herein incorporated by reference.

The A blocks may also be polymer segments of acrylic esters or methacrylic esters. Such polymer blocks may be made according to the methods disclosed in US 6,767,976, which disclosure is herein incorporated by reference. Specific examples of the methacrylic ester include esters of a primary alcohol and methacrylic acid, such as methyl methacrylate, ethyl methacrylate, propyl methacrylate, n-butyl methacrylate, isobutyl methacrylate, hexyl methacrylate, 2-ethylhexyl methacrylate, dodecyl methacrylate, lauryl methacrylate, methoxyethyl methacrylate, dimethylaminoethyl methacrylate, diethylaminoethyl methacrylate, glycidyl methacrylate, trimethoxysilylpropyl methacrylate, trifluoromethyl methacrylate, trifluoroethyl methacrylate; esters of a secondary alcohol and methacrylic acid, such as isopropyl methacrylate, cyclohexyl methacrylate and isobornyl methacrylate; and esters of a tertiary alcohol and methacrylic acid, such as tert-butyl methacrylate. Specific examples of the acrylic ester include esters of a primary alcohol and acrylic acid, such as methyl acrylate, ethyl acrylate, propyl acrylate, n-butyl acrylate, isobutyl acrylate, hexyl acrylate, 2-ethylhexyl acrylate, dodecyl acrylate, lauryl acrylate, methoxyethyl acrylate, dimethylaminoethyl acrylate, diethylaminoethyl acrylate, glycidyl acrylate, trimethoxysilylpropyl acrylate, trifluoromethyl acrylate, trifluoroethyl acrylate; esters of a secondary alcohol and acrylic acid, such as isopropyl acrylate, cyclohexyl acrylate and isobornyl acrylate; and esters of a tertiary alcohol and acrylic acid, such as tert-butyl acrylate. If necessary, as raw material or raw materials, one or more of other anionic polymerizable monomers may be used together with the (meth)acrylic ester. Examples of the anionic polymerizable monomer that can be optionally used include methacrylic or acrylic monomers such as trimethylsilyl methacrylate, N-,N-dimethylmethacrylamide, N,N-diisopropylmethacrylamide, N,N-diethylmethacrylamide, N,N-methylethylmethacrylamide, N,N-di-tert-butylmethacrylamide, trimethylsilyl acrylate, N,N-dimethylacrylamide, N,N-di-isopropylacrylamide, N,N-methylethylacrylamide and N,N-di-tert-butylacrylamide. Moreover, there may be used a multifunctional anionic polymerizable monomer having in the molecule thereof two or more methacrylic or acrylic structures, such as methacrylic ester structures or acrylic ester structures (for example, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, trimethylolpropane triacrylate and trimethylolpropane trimethacrylate).

In the polymerization processes used to make the acrylic or methacrylic ester polymer blocks, only one of the monomers, for example, the (meth)acrylic ester may be used, or two or more thereof may be used in combination. When two or more of the monomers are used in combination, any copolymerization form selected from random, block, tapered block and the like copolymerization forms may be effected by selecting conditions such as a combination of the monomers and the timing of adding the monomers to the polymerization system (for example, simultaneous addition of two or more monomers, or separate additions at intervals of a given time).

The A blocks may also contain up to 15 mol percent of the vinyl aromatic monomers such as those present in the B blocks which are addressed in more detail in the following. In some embodiments, the A blocks may contain up to 10 mol percent, preferably they will contain only up to 5 mol percent, and particularly preferably only up to 2 mol percent of the vinyl aromatic monomers as mentioned for the B blocks. However, in the most preferred embodiments, the A blocks will contain no vinyl monomers as present in the B blocks. The sulfonation level in the A blocks may be from 0 up to 15 mol percent of the total monomers in the A block. It will be understood by those skilled in the art that suitable ranges include any combination of the specified mol percents even if the specific combination and range is not listed herewith.

The B blocks, in each case, comprises segments of one or more polymerized vinyl aromatic monomers selected from unsubstituted styrene monomer, ortho-substituted styrene monomers, meta-substituted styrene monomers, alpha-methylstyrene monomer, 1,1-diphenylethylene monomer, 1,2-diphenylethylene monomer, and mixtures thereof. In addition to the monomers and polymers mentioned above, the B blocks may also comprise a partially or completely hydrogenated copolymer of such monomer(s) with a conjugated diene selected from 1,3-butadiene, isoprene and mixtures thereof, having a vinyl content of between 20 and 80 mol percent. These copolymers with partially or completely hydrogenated dienes may be random copolymers, tapered copolymers, block copolymers or controlled distribution copolymers. In one preferred embodiment, the B blocks are selectively partially or completely hydrogenated and comprise a copolymer of conjugated dienes and the vinyl aromatic monomers noted in this paragraph. In another preferred embodiment, the B blocks are unsubstituted styrene monomer blocks which are saturated by virtue of the nature of the monomer and do not require the added process step of hydrogenation. The B blocks having a controlled distribution structure are disclosed in US 7,169,848, which disclosure is herein incorporated by reference. US 7,169,848 also discloses the preparation of sulfonated block copolymers. The B blocks comprising a styrene block are described herein. In a preferred embodiment, the B blocks are made up of unsubstituted styrene and will not require a separate hydrogenation step.

In another aspect of the present disclosure, the block copolymer includes at least one impact modifier block D having a glass transition temperature less than 20°C. In one embodiment, the impact modifier block D comprises a hydrogenated polymer or copolymer of a conjugated diene selected from isoprene, 1,3-butadiene and mixtures thereof the butadiene portion of the polymer block having a vinyl content prior to hydrogenation of between 20 and 80 mol percent and the polymer block having a number average molecular weight of between 1,000 and 50,000. In another embodiment, the impact modifier block D comprises an acrylate or silicone polymer having a number average molecular weight of 1,000 to 50,000. In still another embodiment, the impact modifier block D block is a polymer block of isobutylene having a number average molecular weight of 1,000 to 50,000.

Each A block independently has a number average molecular weight between about 1,000 and about 60,000 and each B block independently has a number average molecular weight between about 10,000 and about 300,000. Preferably each A block has a number average molecular weight of between 2,000 and 50,000, more preferably between 3,000 and 40,000 and even more preferably between 3,000 and 30,000. Preferably each B block has a number average molecular weight of between 15,000 and 250,000, more preferably between 20,000 and 200,000, and even more preferably between 30,000 and 100,000. It will be understood by those skilled in the art that suitable ranges include any combination of the specified number average molecular weights even if the specific combination and range is not listed herewith. These molecular weights are most accurately determined by light scattering measurements, and are expressed as number average molecular weight. Preferably, the sulfonated polymers have from about 8 mol percent to about 80 mol percent, preferably from about 10 to about 60 mol percent A blocks, more preferably more than 15 mol percent A blocks and even more preferably from about 20 to about 50 mol percent A blocks.

The relative amount of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in the sulfonated block copolymer is from about 5 to about 90 mol percent, preferably from about 5 to about 85 mol percent. In alternative embodiments, the amount is from about 10 to about 80 mol percent, preferably from about 10 to about 75 mol percent, more preferably from about 15 to about 75 mol percent, with the most preferred being from about 25 to about 70 mol percent. It will be understood by those skilled in the art that suitable ranges include any combination of the specified mol percents even if the specific combination is not listed herewith.

In a preferred embodiment, the mol percent of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in each B block is from about 10 to about 100 mol percent, preferably from about 25 to about 100 mol percent, more preferably from about 50 to about 100 mol percent, even more preferably from about 75 to about 100 mol percent and most preferably 100 mol percent. It will be understood by those skilled in the art that suitable ranges include any combination of the specified mol percents even if the specific combination and range is not listed herewith.

Typical levels of sulfonation are such that each B block contains one or more sulfonic functional groups. Preferred levels of sulfonation are 10 to 100 mol percent based on the mol percent of vinyl aromatic monomers which are unsubstituted styrene monomer, ortho-substituted styrene monomer, meta-substituted styrene monomer, alpha-methylstyrene monomer, 1,1-diphenylethylene monomer, and 1,2-diphenylethylene monomer in each B block, more preferably about 20 to 95 mol percent and even more preferably about 30 to 90 mol percent. It will be understood by those skilled in the art that suitable ranges of sulfonation include any combination of the specified mol percents even if the specific combination and range is not listed herewith. The level of sulfonation is determined by titration of a dry polymer sample, which has been re-dissolved in tetrahydrofuran with a standardized solution of NaOH in a mixed alcohol and water solvent.

### 3. Overall Anionic Process to Prepare Polymers

The anionic polymerization process comprises polymerizing the suitable monomers in solution with a lithium initiator. The solvent used as the polymerization vehicle may be any hydrocarbon that does not react with the living anionic chain end of the forming polymer, is easily handled in commercial polymerization units, and offers the appropriate solubility characteristics for the product polymer. For example, non-polar aliphatic hydrocarbons, which are generally lacking in ionizable hydrogen atoms make particularly suitable solvents. Frequently used are cyclic alkanes, such as cyclopentane, cyclohexane, cycloheptane, and cyclooctane, all of which are relatively non-polar. Other suitable solvents will be known to those skilled in the art and can be selected to perform effectively in a given set of process conditions, with polymerization temperature being one of the major factors taken into consideration.

Starting materials for preparing the block copolymers of the present disclosure include the initial monomers noted above. Other important starting materials for anionic copolymerizations include one or more polymerization initiators. In the present disclosure suitable initiators include, for example, alkyl lithium compounds such as s-butyllithium, n-butyllithium, t-butyllithium, amyllithium and the like and other organo lithium compounds including di-initiators such as the di-sec-butyl lithium adduct of m-diisopropenyl benzene. Other such di-initiators are disclosed in US 6,492,469, the disclosure of which is incorporated herein by reference. Of the various polymerization initiators, s-butyllithium is preferred. The initiator can be used in the polymerization mixture (including monomers and solvent) in an amount calculated on the basis of one initiator molecule per desired polymer chain. The lithium initiator process is well known and is described in, for example, US 4,039,593 and US Re. 27,145, the disclosure of each of which is incorporated herein by reference.

Polymerization conditions to prepare the block copolymers of the present disclosure are typically similar to those used for anionic polymerizations in general. The polymerization is preferably carried out at a temperature of from about -30°C to about 150°C, more preferably about 10°C to about 100°C, and most preferably, in view of industrial limitations, from about 30°C to about 90°C. The polymerization is carried out in an inert atmosphere, preferably under nitrogen, and may also be accomplished under pressure within the range of from about 0.5 to about 10 bars. This copolymerization generally requires less than about 12 hours, and can be accomplished in from about 5 minutes to about 5 hours, depending upon the temperature, the concentration of the monomer components, and the molecular weight of the polymer that is desired. When two or more of the monomers are used in combination, any copolymerization form selected from random, block, tapered block, controlled distribution block, and the like copolymerization forms may be utilized.

It will be understood by those skilled in the art that the anionic polymerization process may be moderated by the addition of a Lewis acid, such as an aluminum alkyl, a magnesium alkyl, a zinc alkyl or combinations thereof. The effects of the added Lewis acid on the polymerization process are
1) to lower the viscosity of the living polymer solution allowing for a process that operates at higher polymer concentrations and thus uses less solvent,
2) to enhance the thermal stability of the living polymer chain end which permits polymerization at higher temperatures and again, reduces the viscosity of the polymer solution allowing for the use of less solvent, and
3) to slow the rate of reaction which permits polymerization at higher temperatures while using the same technology for removing the heat of reaction as had been used in the standard anionic polymerization process.

The processing benefits of using Lewis acids to moderate anionic polymerization techniques have been disclosed in US 6,391,981, US 6,455,651 and US 6,492,469, the disclosure of each of which is herein incorporated by reference. Related information is disclosed in US 6,444,767 and US 6,686,423, the disclosure of each of which is incorporated herein by reference. The polymer made by such a moderated, anionic polymerization process can have the same structure as one prepared using the conventional anionic polymerization process and as such, this process can be useful in making the polymers of the present disclosure. For Lewis acid moderated, anionic polymerization processes, reaction temperatures between 100°C and 150°C are preferred as at these temperatures it is possible to take advantage of conducting the reaction at very high polymer concentrations. While a stoichiometric excess of the Lewis acid may be used, in most instances there is not sufficient benefit in improved processing to justify the additional cost of the excess Lewis acid. It is preferred to use from about 0.1 to about 1 mole of Lewis acid per mole of living, anionic chain ends to achieve an improvement in process performance with the moderated, anionic polymerization technique.

Preparation of radial (branched) polymers requires a post-polymerization step called "coupling". In the above radial formulas n is an integer of from 3 to about 30, preferably from about 3 to about 15, and more preferably from 3 to 6, and X is the remnant or residue of a coupling agent. A variety of coupling agents is known in the art and can be used in preparing the block copolymers. These include, for example, dihaloalkanes, silicon halides, siloxanes, multifunctional epoxides, silica compounds, esters of monohydric alcohols with carboxylic acids, (e.g. methylbenzoate and dimethyl adipate) and epoxidized oils. Star-shaped polymers are prepared with polyalkenyl coupling agents as disclosed in, for example, US 3,985,830, US 4,391,949 and US 4,444,953; as well as CA 716,645, the disclosure of each of which is incorporated herein by reference. Suitable polyalkenyl coupling agents include divinylbenzene, and preferably m-divinylbenzene. Preferred are tetra-alkoxysilanes such as tetra-methoxysilane (TMOS) and tetra-ethoxysilane (TEOS), tri-alkoxysilanes such as methyltrimethoxysilane (MTMS), aliphatic diesters such as dimethyl adipate and diethyl adipate, and diglycidyl aromatic epoxy compounds such as diglycidyl ethers deriving from the reaction of bis-phenol A and epichlorohydrin.

Linear polymers may also be prepared by a post-polymerization "coupling" step. However, unlike radial polymers, "n" in the above formulas is the integer 2, and X is the remnant or residue of a coupling agent.

### 4. Process to Prepare Hydrogenated Block Copolymers

As noted, in some cases - i.e., (1) when there is a diene in the B interior blocks, (2) when the A block is a polymer of a 1,3-cyclodiene, (3) when there is an impact modifier block D and (4) when the A block is a polymer of a conjugated diene having a vinyl content of less than 35 mol percent - it is necessary to selectively hydrogenate the block copolymer to remove any ethylenic unsaturation prior to sulfonation. Hydrogenation generally improves thermal stability, ultraviolet light stability, oxidative stability, and, therefore, weatherability of the final polymer, and reduces the risk of sulfonating the A block or the D block.

Hydrogenation can be carried out via any of the several hydrogenation or selective hydrogenation processes known in the prior art. Such hydrogenation has been accomplished using methods such as those taught in, for example, US 3,595,942, US 3,634,549, US 3,670,054, US 3,700,633, and US Re. 27,145, the disclosure of each of which is incorporated herein by reference. These methods operate to hydrogenate polymers containing ethylenic unsaturation and are based upon operation of a suitable catalyst. Such a catalyst, or catalyst precursor, preferably comprises a Group 8 to 10 metal such as nickel or cobalt which is combined with a suitable reducing agent such as an aluminum alkyl or hydride of a metal selected from Groups 1, 2 and 13 of the Periodic Table of the Elements, particularly lithium, magnesium or aluminum. This preparation can be accomplished in a suitable solvent or diluent at a temperature from about 20°C to about 80°C. Other catalysts that are useful include titanium based catalyst systems.

Hydrogenation can be carried out under such conditions that at least about 90 percent of the conjugated diene double bonds are reduced, and between zero and 10 percent of the arene double bonds are reduced. Preferred ranges are at least about 95 percent of the conjugated diene double bonds reduced, and more preferably about 98 percent of the conjugated diene double bonds are reduced.

Once the hydrogenation is complete, it is preferable to oxidize and extract the catalyst by stirring the polymer solution with a relatively large amount of aqueous acid (preferably 1 to 30 percent by weight acid), at a volume ratio of about 0.5 parts aqueous acid to 1 part polymer solution. The nature of the acid is not critical. Suitable acids include phosphoric acid, sulfuric acid and organic acids. This stirring is continued at about 50°C for from about 30 to about 60 minutes while sparging with a mixture of oxygen and nitrogen. Care must be exercised in this step to avoid that an explosive mixture of oxygen and hydrocarbons is formed.

### 5. Process to Make Sulfonated Polymers

According to the multiple embodiments disclosed herein, the above prepared block copolymers are sulfonated to obtain a sulfonated polymer product that is in solution and in micellar form. In this micellar form, the sulfonated block copolymer can be neutralized prior to casting a membrane, and at the same time, the risk of gelling and/or precipitation of the sulfonated block copolymer while in solution is reduced.

Without being bound by any particular theory, it is the present belief that the micelle structure of the sulfonated block copolymer can be described as having a core comprising the sulfonated block or blocks having a substantial amount of spent sulfonating agent residues which is surrounded by the sulfonation resistant block or blocks which, in turn, are swollen by an organic non-halogenated aliphatic solvent. As will be further described in more detail below, the sulfonated blocks are highly polar due to the presence of sulfonic acid and/or sulfonate ester functional groups. Accordingly, such sulfonated blocks are sequestered into a core, while the outer sulfonation resistant blocks form a shell which is solvated by a non-halogenated aliphatic solvent. In addition to forming discrete micelles, there may also be formation of polymer aggregates. Without being bound by any particular theory, polymer aggregates can be described as discrete or non-discrete structures resulting from association of polymer chains in ways other than the description provided for micelles, and/or loosely aggregated groups of two or more discrete micelles. Accordingly, the solvated sulfonated block copolymer in micellar form may include discrete micelles and/or aggregates of micelles, with such solution optionally including aggregated polymer chains having structures other than the micelle structure.

Micelles can be formed as a result of the sulfonation process, or alternatively, the block copolymer may arrange in a micelle structure prior to sulfonation.

In some embodiments, for the formation of micelles, the sulfonation processes as described in WO 2008/089332 may be employed. The methods are useful for preparing sulfonated styrenic block copolymers as described in US 2007/021569.

After polymerization, the polymer can be sulfonated using a sulfonation reagent such as an acyl sulfate in at least one non-halogenated aliphatic solvent. In some embodiments, the precursor polymer can be sulfonated after being isolated, washed, and dried from the reaction mixture resulting from the production of the precursor polymer. In some other embodiments, the precursor polymer can be sulfonated without being isolated from the reaction mixture resulting from the production of the precursor polymer.

### (i) Solvent

The organic solvent is preferably a non-halogenated aliphatic solvent and contains a first non-halogenated aliphatic solvent which serves to solvate one or more of the sulfonation resistant blocks or non-sulfonated blocks of the copolymer. The first non-halogenated aliphatic solvent may include substituted or unsubstituted cyclic aliphatic hydrocarbons having from about 5 to 10 carbons. Non-limiting examples include cyclohexane, methylcyclohexane, cyclopentane, cycloheptane, cyclooctane and mixtures thereof. The most preferable solvents are cyclohexane, cyclopentane and methylcyclohexane. The first solvent may also be the same solvent used as the polymerization vehicle for anionic polymerization of the polymer blocks.
In some embodiments, the block copolymer may be in micellar form prior to sulfonation even in the case of using only a first solvent. The addition of a second non-halogenated aliphatic solvent to a solution of the precursor polymer in the first non-halogenated aliphatic solvent can result in or assist the "pre-formation" of polymer micelles and/or other polymer aggregates. The second non-halogenated solvent, on the other hand, is preferably chosen such that it is miscible with the first solvent, but is a poor solvent for the sulfonation susceptible block of the precursor polymer in the process temperature range and also does not impede the sulfonation reaction. In other words, preferably, the sulfonation susceptible block of the precursor polymer is substantially insoluble in the second non-halogenated solvent in the process temperature range. In the case where the sulfonation susceptible block of the precursor polymer is polystyrene, suitable solvents which are poor solvents for polystyrene and can be used as the second non-halogenated solvent include linear and branched aliphatic hydrocarbons of up to about 12 carbons, for example, hexane, heptane, octane, 2-ethyl hexane, isooctane, nonane, decane, paraffinic oils, mixed paraffinic solvents, and the like. One preferred example of the second non- halogenated aliphatic solvent is n-heptane.

The pre-formed polymer micelles and/or other polymer aggregates allow the sulfonation of the polymer to proceed essentially without disabling gelling at considerably higher concentration than can be achieved without the addition of the second solvent. In addition, this approach can substantially improve the utility of more polar acyl sulfates, such as C₃ acyl sulfate (propionyl sulfate), in terms of polymer sulfonation conversion rate and minimization of byproducts. In other words, this approach may improve the utility of more polar sulfonation reagents. Such acyl sulfates are further described below.

### (ii) Polymer Concentration

In accordance with some embodiments, high levels of styrene sulfonation can be achieved in a manner that is substantially free of polymer precipitation and free of disabling gelling in the reaction mixture, the reaction product, or both, by maintaining the precursor polymer concentration below a limiting concentration of the precursor polymer, at least during the early stages of sulfonation. It will be understood by those skilled in the art that minor amounts of polymers may deposit on surfaces as a result of localized solvent evaporation in the course of processing in a mixture that is substantially free of polymer precipitation. For example, in accordance with some embodiments, a mixture is considered to be substantially free of polymer precipitation when no more than 5% of the polymer in the mixture has precipitated.

The polymer concentration at which the sulfonation can be conducted depends upon the composition of the starting polymer, since the limiting concentration below which polymer gelling is non-disabling or negligible depends upon the polymer composition. As stated above, the limiting concentration may also be dependent on other factors such as the identity of the solvent or the solvent mixture used and the desired degree of sulfonation. Generally, the polymer concentration falls within the range of from about 1%-wt. to about 30%-wt., alternatively from about 1%-wt. to about 20%-wt., alternatively from about 1%-wt. to about 15%-wt., alternatively from about 1%-wt. to about 12%-wt., or alternatively from about 1%-wt. to about 10%-wt., based on the total weight of a reaction mixture that is preferably substantially free of halogenated solvents. It will be understood by those skilled in the art that suitable ranges include any combination of the specified mol percents even if the specific combination and range is not listed herewith.

In accordance with some embodiments of the presently described technology, the initial concentration of the precursor block polymer or mixture of precursor block polymers should be maintained below the limiting concentration of the precursor polymer(s), alternatively in the range of from about 0.1%-wt. to a concentration that is below the limiting concentration of the precursor polymer(s), alternatively from about 0.5%-wt. to a concentration that is below the limiting concentration of the precursor polymer(s), alternatively from about 1.0%-wt. to a concentration that is about 0.1%-wt. below the limiting concentration of the precursor polymer(s), alternatively from about 2.0%-wt. to a concentration that is about 0.1%-wt. below the limiting concentration of the precursor polymer(s),alternatively from about 3.0%-wt. to a concentration that is about 0.1%-wt. below the limiting concentration of the precursor polymer(s), alternatively from about 5.0%-wt. to a concentration that is about 0.1%-wt. below the limiting concentration of the precursor polymer(s), based on the total weight of the reaction mixture. It will be understood by those skilled in the art that suitable ranges include any combination of the specified mol percents even if the specific combination and range is not listed herewith.

At least in some embodiments, maintaining the polymer concentration below the limiting concentration can result in reaction mixtures with reduced concentrations of by-product carboxylic acid relative to the higher concentration conditions that lead to gelling.

It will be understood by those skilled in the art, however, that during the production of the sulfonated polymer in some embodiments of the present technology, especially in a semi-batch or continuous production process, the total concentration of the polymer(s) in the reaction mixture may be above the limiting concentration of the precursor polymer.

### (iii) Sulfonation agent

According to multiple embodiments, acyl sulfate may be used for sulfonating the polymerized block copolymer. The acyl group preferably is derived from a C₂ to C₈, alternatively C₃ to C₈, alternatively C₃ to C₅, linear, branched, or cyclic carboxylic acid, anhydride, or acid chloride, or mixtures thereof. Preferably, these compounds do not contain non-aromatic carbon-carbon double bonds, hydroxyl groups, or any other functionality that is reactive with acyl sulfate or decomposes readily under sulfonation reaction conditions. For example, acyl groups that have aliphatic quaternary carbons in the alpha-position from the carbonyl functionality (e.g., acyl sulfate derived from trimethylacetic anhydride) appear to decompose readily during polymer sulfonation reaction, and preferably should be avoided in the presently described technology. Also included in the scope of useful acyl groups for the generation of acyl sulfate in the present technology are those derived from aromatic carboxylic acids, anhydrides, and acid chlorides such as benzoic and phthalic anhydride. More preferably, the acyl group is selected from the group of acetyl, propionyl, n-butyryl, and isobutyryl. Even more preferably, the acyl group is isobutyryl. It has been discovered that isobutyryl sulfate can afford high degrees of polymer sulfonation and relatively minimal by-product formation.

The formation of acyl sulfate from a carboxylic anhydride and sulfuric acid can be represented by the following reaction: 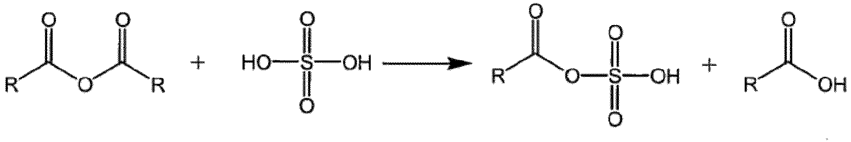 Acyl sulfates are subject to slow decomposition during the course of sulfonation reactions forming alpha-sulfonated carboxylic acids of the following formula:

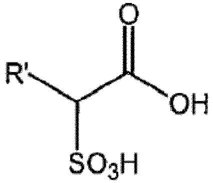

In one embodiment of the presently described technology, the acyl sulfate reagent is obtained from a carboxylic anhydride and sulfuric acid in a reaction that is conducted in a separate "pre-generation" reaction prior to addition to a solution of polymer in a non-halogenated aliphatic solvent. The pre-generation reaction can be conducted with or without a solvent. When a solvent is used to pre-generate the acyl sulfate, the solvent is preferably non-halogenated. Alternatively, the acyl sulfate reagent can be obtained in an in-situ reaction within a solution of the polymer in a non-halogenated aliphatic solvent. In accordance with this embodiment of the present technology, the molar ratio of anhydride to sulfuric acid can be from about 0.8 to about 2, and preferably from about 1.0 to about 1.4. The sulfuric acid used in this preferred method preferably has a concentration of about 93% to about 100% and more preferably has a concentration of about 95% to about 100%, by weight. It will be understood by those skilled in the art that oleum may be used as an alternative to sulfuric acid in an in-situ reaction to generate acyl sulfate, provided that the oleum strength is sufficiently low so as to avoid or minimize unintended charring of the reaction mixture.

In another embodiment of the present technology, the acyl sulfate reagent can be obtained from a carboxylic anhydride and oleum in a reaction that is conducted in a separate "pre-generation" reaction prior to addition to a solution of polymer in aliphatic solvent, wherein the oleum strength is in the range of from about 1% to about 60% free sulfur trioxide, alternatively from about 1% to about 46% free sulfur trioxide, alternatively from about 10% to about 46% free sulfur trioxide, and wherein the molar ratio of anhydride to sulfuric acid present in the oleum is from about 0.9 to about 1.2.

Additionally, the acyl sulfate reagent can be prepared from a carboxylic anhydride via reaction with any combination of sulfuric acid, oleum, or sulfur trioxide. Further, the acyl sulfate reagent can be prepared from a carboxylic acid via reaction with chlorosulfonic acid, oleum, sulfur trioxide, or any combination thereof. Moreover, the acyl sulfate reagent can also be prepared from a carboxylic acid chloride via reaction with sulfuric acid. Alternatively, the acyl sulfate may be prepared from any combination of carboxylic acid, anhydride, and/or acid chloride.

The sulfonation of polymer styrenic repeat units with the acyl sulfate can be represented by the following reaction:

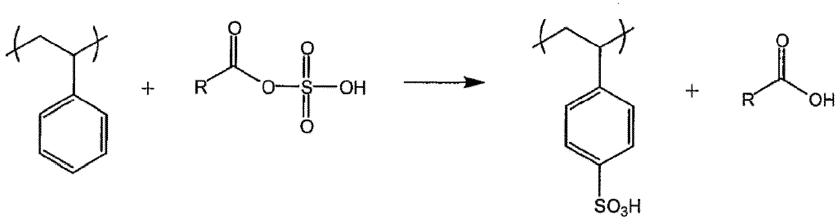

The acyl sulfate reagent that may be used relative to the moles of sulfonation susceptible monomer repeat units present in the polymer solution in amounts ranging from very low levels for lightly sulfonated polymer products to high levels for heavily sulfonated polymer products. The molar amount of the acyl sulfate can be defined as the theoretical amount of the acyl sulfate that can be generated from a given method, the amount being dictated by the limiting reagent in the reaction. The molar ratio of acyl sulfate to styrene repeat units (i.e., sulfonation susceptible units) in accordance with some embodiments of the present technology may range from about 0.1 to about 2.0, alternatively from about 0.2 to about 1.3, alternatively from about 0.3 to about 1.0.

In accordance with at least some embodiments of the presently described technology, the degree of sulfonation of the vinyl aromatic monomers susceptible to sulfonation in the block polymers is greater than about 0.4 milliequivalents (meq) sulfonic acid per gram sulfonated polymer (0.4 meq/g), alternatively greater than about 0.6 meq sulfonic acid per gram sulfonated polymer (0.6 meq/g), alternatively greater than about 0.8 meq sulfonic acid per gram sulfonated polymer (0.8 meq/g), alternatively greater than about 1.0 meq sulfonic acid per gram sulfonated polymer (1.0 meq/g), alternatively greater than about 1.4 meq sulfonic acid per gram sulfonated polymer (1.4 meq/g). For example, after the precursor polymers described above are sulfonated in accordance with the methods of the presently described technology, the typical levels of sulfonation are where each B block contains one or more sulfonic functional groups. Preferred levels of sulfonation are from about 10 to about 100 mol percent, alternatively from about 20 to 95 mol percent, alternatively from about 30 to 90 mol percent, and alternatively from about 40 to about 70 mol percent, based on the mol percent of sulfonation susceptible vinyl aromatic monomers in each B block, which can be, for example, unsubstituted styrene monomer, ortho-substituted styrene monomer, meta-substituted styrene monomer, alpha-methylstyrene monomer, 1,1-diphenyl ethylene monomer, 1,2-diphenyl ethylene monomer, a derivative thereof, or a mixture thereof. It will be understood by those skilled in the art that suitable ranges of sulfonation level include any combination of the specified mol percents even if the specific combination and range is not listed herewith.

The level or degree of sulfonation of a sulfonated polymer can be measured by NMR and/or titration methods as known to people skilled in the art, and/or a method using two separate titrations as described in the Examples below and may be appreciated by people skilled in the art. For example, a resulting solution from the methods of the present technology can be analyzed by ¹H-NMR at about 60°C (±20°C). The percentage styrene sulfonation can be calculated from the integration of aromatic signals in the ¹H-NMR spectrum. For another example, the reaction product can be analyzed by two separate titrations (the "two-titration method") to determine the levels of styrenic polymer sulfonic acid, sulfuric acid, and non-polymeric by-product sulfonic acid (e.g. 2-sulfo-alkylcarboxylic acid), and then to calculate the degree of styrene sulfonation based on mass balance. Alternatively, the level of sulfonation can be determined by titration of a dry polymer sample, which has been re-dissolved in tetrahydrofuran with a standardized solution of NaOH in a mixture of alcohol and water. In the latter case, rigorous removal of by-product acids are preferably ensured.

Although embodiments for sulfonating polymers are described above in the context of acyl sulfate reagents, the utility of other sulfonation reagents are also contemplated. For example, the use of those sulfonation reagents derived from complexing/reacting sulfur trioxides and phosphate esters such as triethylphosphate has been demonstrated in the present technology. The chemistry of such sulfonation reagents is known in the art to afford aromatic sulfonation with significant degrees of sulfonic acid alkyl ester incorporation. As such, the resultant sulfonated polymers likely contain both sulfonic acid and sulfonic acid alkyl ester groups. Other contemplated sulfonation reagents include, but are not limited to, those derived from the reaction or complexation of sulfur trioxide with phosphous pentoxide, polyphophoric acid, 1,4-dioxane, triethylamine, etc.

### (iv) Reaction conditions

The sulfonation reaction between the acyl sulfates and sulfonation susceptible block copolymers such as aromatic-containing polymers (e.g., styrenic block copolymers) can be conducted at a reaction temperature in the range of from about 20°C to about 150°C, alternatively from about 20°C to about 100°C, alternatively from about 20°C to about 80°C, alternatively from about 30°C to about 70°C, alternatively from about 40°C to about 60°C (e.g., at about 50°C). The reaction time can be in the range of from approximately less than 1 minute to approximately 24 hours or longer, dependent on the temperature of the reaction. In some preferred acyl sulfate embodiments that utilize in-situ reaction of carboxylic anhydride and sulfuric acid, the initial temperature of the reaction mixture can be about the same as the intended sulfonation reaction temperature. Alternatively, the initial temperature may be lower than the intended subsequent sulfonation reaction temperature. In a preferred embodiment, the acyl sulfate can be generated in-situ at about 20°C to about 40°C (e.g., at about 30°C) for about 0.5 to about 2 hours, alternatively about 1 to about 1.5 hours, and then the reaction mixture can be heated to about 40°C to about 60°C to expedite the completion of the reaction.

Although not required, an optional reaction quenching step can be conducted through the addition of a quenching agent, which can be, for example, water or hydroxyl-containing compounds such as methanol, ethanol, or isopropanol. Typically in such a step, an amount of the quenching agent at least sufficient to react with residual unreacted acyl sulfate may be added.

In some embodiments of the presently described technology, the sulfonation of the aromatic-containing polymer in a non-halogenated aliphatic solvent can be carried out by contacting the aromatic-containing polymer with a sulfonation reagent in a batch reaction or a semi-batch reaction. In some other embodiments of the present technology, the sulfonation can be carried out in a continuous reaction, which can be enabled, for example, through the use of a continuous stirred tank reactor or a series of two or more continuous stirred tank reactors.

As a result of sulfonation, the micelle cores contain sulfonation susceptible blocks having sulfonic acid and/or sulfonate ester functionality which are surrounded by an outer shell containing sulfonation resistant blocks of the block copolymer. The driving force for this phase segregation (causing the micelle formation) in solution has been attributed to the considerable difference in polarity between the sulfonated block(s) and the non-sulfonated blocks of the sulfonated block copolymer. The latter blocks are freely solvable by a non-halogenated aliphatic solvent, for example the first solvent disclosed above. On the other hand, the sulfonated polymer block(s) may arrange to concentrate in the core of micelle.

Once the sulfonation reaction is completed, the block copolymers can be cast directly into an article form (e.g., membrane) without the necessity of isolating the block copolymer. In this particular embodiment the polymeric film (e.g., membrane) can be submerged in water and will retain its form (solid) while in the water. In other words, the block copolymer will not dissolve in water or disperse in water.

### (v) Additional components

Further, the copolymers disclosed herein can be compounded with other components not adversely affecting the copolymer properties or the membrane formed from the sulfonated block copolymer.

### Form Retaining Frame

The ERV core disclosed herein can employ a form retaining frame. Such form can be for example, thermally formed or mechanically formed, for example a corrugation process. Such frame can be a rigid or semi-rigid structure or sheet. Such frame is capable of maintaining its form and shape (i.e. mechanical strength) on its own without other support. Preferably the frame is in the form of a sheet and made of fiberglass, aluminum or hard polymer or a composite of such materials.

The metals can include aluminum, copper, tin, nickel or steel, with aluminum as most preferred. Plastics to be employed are not limited, but are those which are thick enough and sufficiently rigid to maintain a particular shape, and not interfere with the passage of the air stream, and can include for example polyethylenes, polypropylenes, Polyvinylchloride (PVC), styrene/acrylonitrile/butadiene (ABS), Nomex® and Kevlar®. The sheets can be formed by conventional means through extrusion, molding, or sintering, and may be woven or non-woven.

The sheets can be in various forms including a netting, screen mesh or lattice, metal mesh, woven and non-woven metal or polymers, perforated or apertured plates. Perforation can be conducted by example by puncturing the frame with a needle of desired thickness. Suitable frames are porous and sufficiently rigid to maintain a preformed shape.

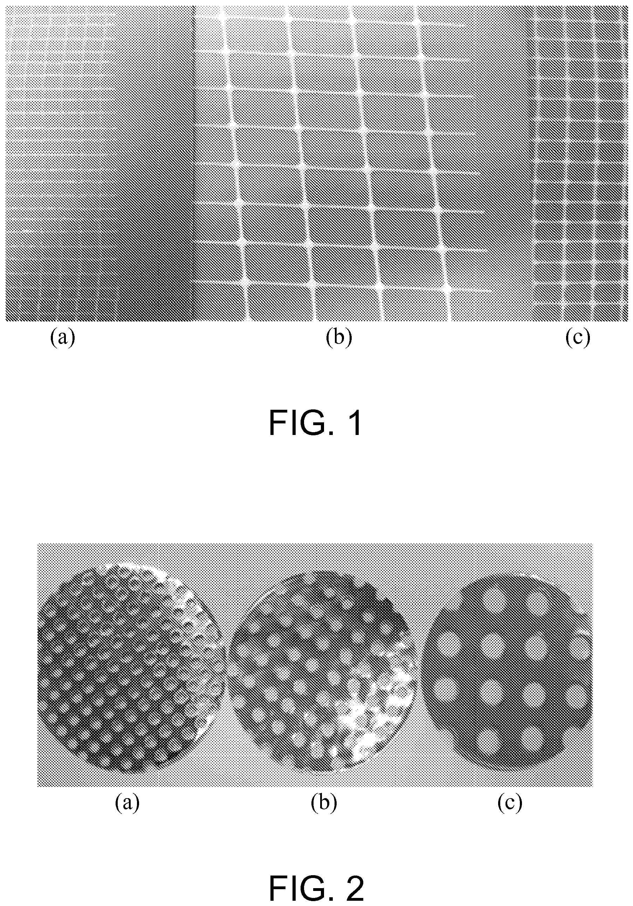

For example, FIG. 1a, 1b, and 1c illustrates three different polymeric extruded netting frames. FIG. 2a, 2b, 2c illustrates three different perforated aluminum plates.

The frames are porous, with such pores being of sufficient size to permit direct contact of air without interference of moisture transport or significant pressure drop. Depending on the material, the pores can be from submicron up to 8 cm, alternatively up to 10 cm, or larger. For example with frames formed into a netting, the pores, or apertures, making up the netting may be from submicron to 5 cm, alternatively from 0.1 to 4 cm, alternatively from 1 to 3 cm. For perforated or aperture aluminum or plastic plates, the pores cam be from submicron to 5 cm, alternatively from 0.1 to 4 cm, alternatively from 1 to 3 cm. Notably, the plates can have more frame surface area surrounding the apertures as compared to netting which would have thinner threadlike surface between pores. In either case, the surface of the frame between the pores should be sufficient that a polymeric film can be bonded thereto and maintain attachment.

With respect to non-woven or woven frames, which may be metal or polymeric, in some embodiments, the pore diameter is from 0.1 to 200 microns, alternatively from 1 micron to 100, alternatively from 5 to 50 microns. With respect to sintered frame, the pores may be from 0.01 to 200 microns, alternatively from 0.1 micron to 100, alternatively from 5 to 50 microns.

The frame should have a thickness sufficient to maintain strength and not interfere with air flow or moisture transport. The thickness will depend on multiple factors including the number of stacked layers of frames, the air flow rate and pressure, and strength needed to maintain the ERV core. Accordingly, the thickness can be from 25 microns to 500 microns, alternatively from 100 microns to 500 microns, alternatively from 200 microns to 500 microns.

The shape, depth, tortuosity and distribution of the pores can affect the air flow pattern inside of the air channel such as creating some degree of turbulence, as well as to affect the contact with the film bonded to the frame. The depth of the pores is determined generally by the thickness of the frame. Additionally, the shape of the pores can be square, circular, spherical, hexagonal, or other polygonal shape.

The sulfonated block copolymer film disclosed herein can be bonded to the frame by heat or adhesive lamination or coating. The bonding should be such that the polymer film layer rests across the plurality of pores in the frame so as to serve as a barrier to the passage of air. Such polymer film can be continuous to cover the overall frame, or alternatively, just fill in the pores. However, due to the pores in the frame, the air streams will have more direct access to the moisture permeable film.

The rigid or semi-rigid frame can have a flat planar form, or can be formed into a shape in order to act as a spacer. When formed into shapes to serve as spacer, frame should be sufficiently rigid so as to maintain its form, however some flexibility is permissible but should limited to the degree for maintain stability of the ERV core, and also avoiding a substantial pressure drop. Additionally, when serving as a spacer, the frame can have a continuous corrugated shape, a wave shape, ridged shape, or other shapes for maintaining space sufficient for airflow between successive levels of film and other layers in the ERV core. Frame can be he thermally, mechanically, or chemically formed into the desired shape.

### Substrate

The substrate is optionally employed with the sulfonated polymeric film to provide mechanical strength while permitting airflow and moisture transport. Accordingly, it should be made of a porous material to allow humid air to pass through with as little resistance as possible while also providing structural integrity. The porous substrate may be those known and used in the art, many of which are commercially available.

Substrate may include aforementioned rigid or semi-rigid frame, the substrate can also have the less rigid flexibility of for example cellulosic paper materials. Furthermore, the pores can be very small, including microporous. Accordingly, the pores can be less than 10 micron, alternatively less than 5 micron, alternatively less than 2 micron, alternatively less than 0.1 micron. However, those of skill in the art would understand that the pores should not be so small such that air is too restricted from passing through to the polymeric film. Alternatively, substrates with larger pore sizes may also be employed. For example less than 5 cm, alternatively less than 1 cm, alternatively less than 1 mm, alternatively less than 500 micron. Accordingly, the pores can have a range of from 0.1 micron to 5 cm, alternatively from 2 micron to 1cm, alternatively from 2 micron to 500 micron.

Accordingly, the substrate to be used with the membrane disclosed herein includes porous cellulosic fibrous materials. Materials include, for example, fabrics, polymeric films and fibers, and cellulosic materials (such as paper). The substrate may be composed of natural and/or synthetic fibers. Fabrics include wovens, non-wovens, knits and cross-laid fabrics.

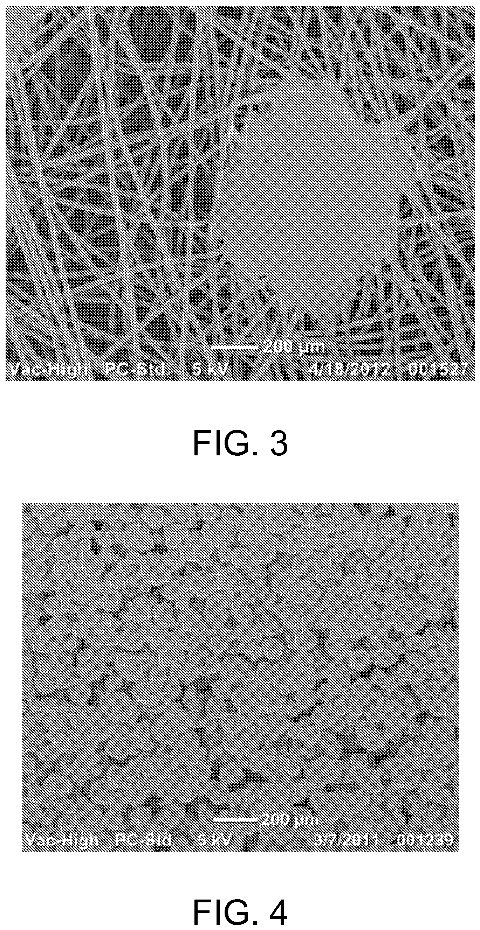

In FIG. 3, there is shown a non-woven cellulosic substrate having pores less than 200 microns. Moreover, a sintered porous substrate is shown in FIG. 4 with pores being less than 100 microns.

Further, the substrate may be composed of filaments, glass yarns, fiberglass, non-corroding metal fibers (such as nickel fibers), as well as well as carbon fibers. Synthetic fibers include polyolefins, polyethylene, polypropylene, polyesters, nylon, Nomex® and Kevlar®.

Exemplary substrates also include polyvinylidene fluoride, polytetrafluoroethylene, nylon, polyethersulfone, polypropylene, polyamide, cellulose, cellulose nitrate, cellulose acetate, cellulose nitrate/acetate polytetrafluoroethylene, Polyethylene Terephthalate (PET), and Polyether ether ketone (PEEK).

Additives or coatings (other than coating of the sulfonated polymer) may be added to the substrate to improve other properties. Such additives should not interfere with the effectiveness and efficiency of the ERV unit, or introduce any harmful components into the air streams. One type of additives is flame retardants which may be employed to inhibit or prevent fire or the spread of fire. For example, non-halogen flame retardants may be employed as well as phosphorus containing compounds. Other useful flame retardants known in the art may be used.

Biocides may also be applied, including fungicides, microbicides and bactericides, for preventing growth of molds, mildew, fungus, bacteria, viruses, and parasites as well as other biological organisms that may be harmful to humans or reduce the efficiency of the ERV unit.

Other additives may be added to the substrate to increase its strength, porosity and life, to enhance moisture transport such as silica, alumina and zeolites.

### Spacers

Spacers can be employed in the ERV core as described herein. Spacers will be made of the same materials as the rigid or semi-rigid frame described above, namely fiberglass, metal, plastic or a composite of such materials. In some embodiments, the metal employed is aluminum, copper, tin, nickel or steel. Preferably, the spacers are aluminum plates or a hard plastic.

Spacers are known in the art and are directed to providing space between stacked polymer layers for air flow therebetween. Accordingly, the spacers can have a variety of shapes, with the corrugated, or ridged shapes being most preferred. With such shape, air channels are formed for the flow of air, and thus can be stacked in alternating fashion to permit the passage of the intake and exhaust air streams in a cross flow pattern, or alternatively, a counter flow pattern, or alternatively, a cross-counter flow pattern. Such ridged or corrugated shapes are shown for example in US Publication No. 2012/0073791, FIG. 2. Additionally, the air channels may be straight, curved, or have a zig zag pattern. A parallel curvilinear pattern is shown for example in US 2009/0314480.

Additionally, such spacers also may be porous and have a plurality of pores across surface. Depending on the material, the pores can be from 0.1 microns up to 5 cm. For example with frames formed into a netting, the pores, or apertures, making up the netting may be from 0.05 cm to 5 cm, alternatively from 0.1 to 4 cm, alternatively from 1 to 3 cm. Such pores can be designed in such a way that the size, shape, depth, tortuosity, as well as distribution can effectively affect the air flow pattern to provide better contact of air with the moisture permeable membrane or composites.

When the spacer is porous, in some embodiments the sulfonated block copolymer film disclosed herein can be bonded to the spacer via lamination including or heat lamination, adhesive lamination as well as coating. The bonding should be such that the polymer film layer rests across the plurality of pores of the spacer so as to serve as a barrier to the passage of air but permit moisture transport.

Accordingly, the thickness can be from submicron to 20mm, alternatively from 1mm to 10mm, alternatively from 1 to 5mm.

### ERV configurations

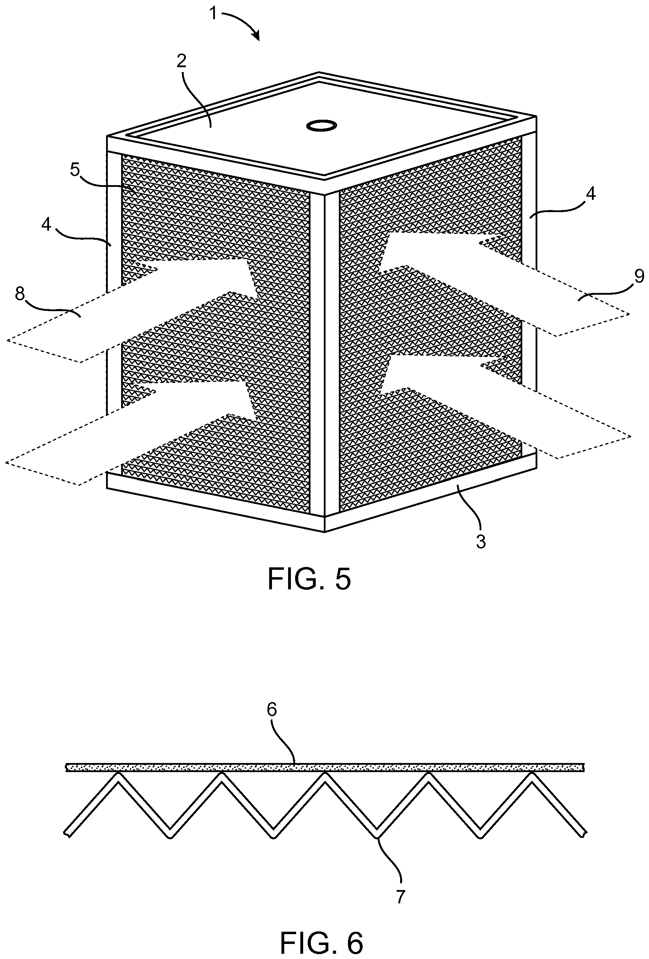

The ERV core can have several configurations. One embodiment of an ERV core unit 1 is shown in FIG. 5. As shown therein the unit has a housing made up of a top cover 2 and a bottom cover 3 with side supports 4. Within the housing is held a stack of moisture permeable but air impenetrable structures 5. The structures 5 can be multilayer and include the sulfonated block copolymer films, rigid or semi-rigid frames, substrate and/or spacers. In the embodiment shown, the fresh intake air flow is shown by arrow 8 and furthermore the exhaust air flow is shown by arrow 9 and thus the air streams have a cross flow pattern.

One possibility of a moisture permeable but air impenetrable structures 5 is illustrated in FIG. 6, illustrated is the sulfonated block copolymer film 6 with spacer 7 interposed therebetween. Spacer 7 is configured to provide channels for airflow between membranes 6. The size of such channels 8 may be such as to provide an air gap from about 2 to 30 mm. In the possibility shown in FIG. 6, this is done by forming the spacers 7 into a corrugated or ridged formation. The corrugated shape has peaks 9 and troughs 10 and thus form longitudinal air channels along the length of the spacers in one direction, thus permitting flow both above and below the spacer depending on the formation of the ridges.

The advantage of the configuration of FIG. 6 is that the air passing through the air channels 8 can contact the full surface of the film 6 and provide moisture transport across the film. In such embodiment, the sulfonated block copolymer film must have sufficient thickness to support its weight without the help of an additional substrate or structure to provide support. Accordingly, such film should have a thickness of from 0.5µ to 50 µ, alternatively from 1 to25 µ, and from 1.5µ -13 µ.

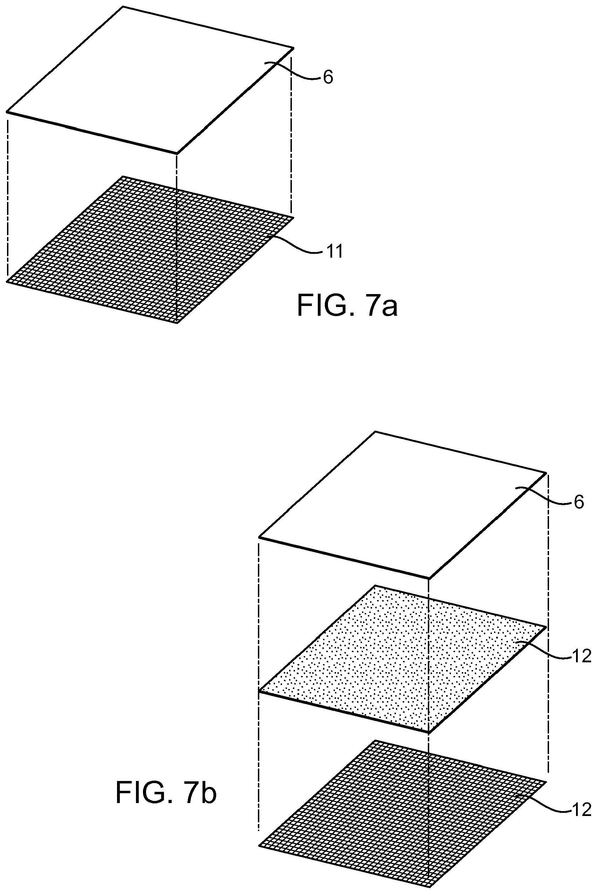

Illustrated in FIG. 7a, the frame 11 is a screen mesh and the sulfonated block copolymer film 6 separated from one another. When bonded together these form a multilayer structure which serves as a barrier to air, but aids moisture transport. The mesh provides pores through which air can pass without much impediment to reach the film 6. In FIG. 7b, there is depicted the film 6, a substrate 12 and the frame 11 separated from one another. When bonded together these also form a multilayer structure which serves as a barrier to air, but aids moisture transport. The substrate 12 provides mechanical support to the film 6.

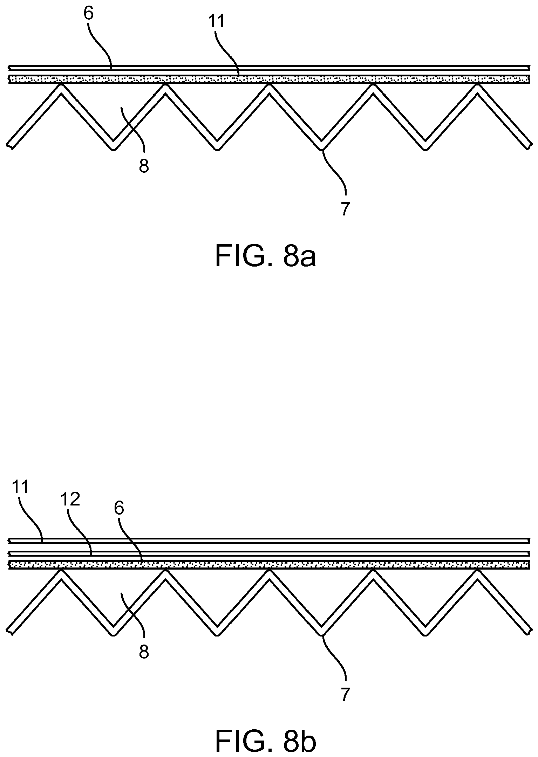

Another possibility is shown in FIG. 8a, where the film 6 is bonded to a frame 11 of FIG. 7a, thus forming a multilayer structure, and then then be bonded to the spacer 7. As can be seen in the figure, the multilayer structure is bonded to the peaks of the corrugated spacer 7, thus maintaining air channels 8. The frame 11 can be bonded to either or both sides of the film 6.

Illustrated in FIG. 8b, the film 6 is bonded to a substrate 12, and a rigid or semi-rigid frame 11 as in FIG. 7b forming a multilayer structure. This is then bonded to the peaks of the corrugated spacer 7.

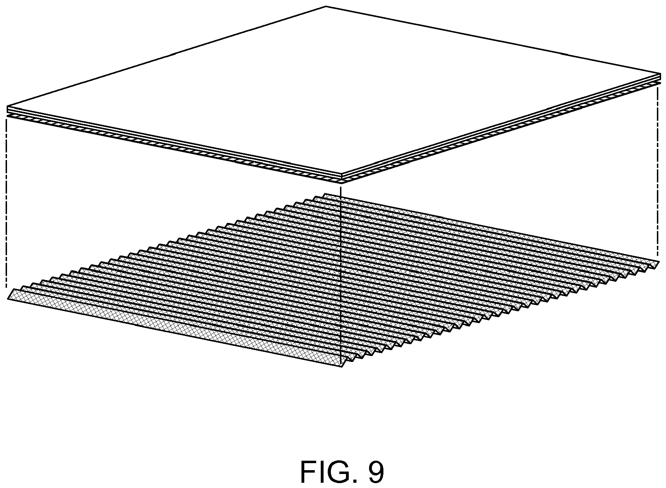

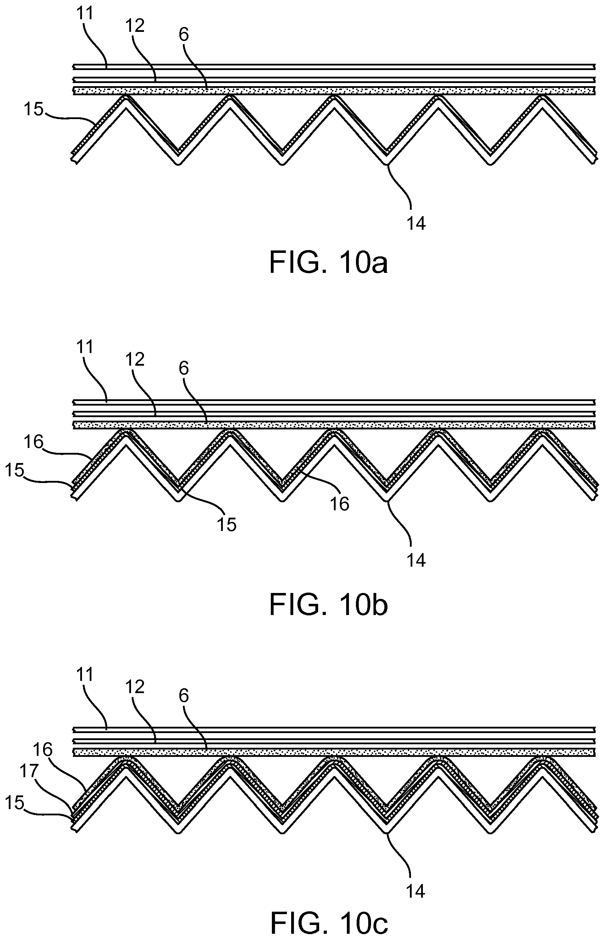

In yet another embodiment shown in FIG. 9, there is shown the multilayer structure of FIG. 7b, with the film 6 bonded to the substrate 12 and rigid or semi-rigid frame 11, bonded to the spacer 7. However, in the embodiment of FIG. 9, the corrugated spacer 14 is an aluminum screen mesh and is therefore porous. In the embodiment according to the invention as defined in claim 1, illustrated in FIG. 10a, the spacer 14 has a sulfonated block copolymer film 15 bonded therein. In this embodiment, the film 15 is bonded across the entire surface of the spacer 14. FIG. 10b and 10c illustrates a further embodiment according to the invention where the multilayer structures such as those in FIGS. 3a and 3b, respectively, are bonded thereon. For example, in FIG. 10b, the film 15 is bonded to a frame 16, to form a multilayer structure, which is then bonded across the surface of the spacer 14. The film 15 can be bonded to either or both sides of the frame 16. In FIG. 10b, the film 15 is bonded to a substrate 17 and frame 16 to form a multilayer structure, which is then bonded across the surface of the spacer 14. In FIGS. 10a-10c, other embodiments include those where only film 15 is bonded to the spacer 14, or the film 15 and frame 16, in addition to the embodiment shown where all three layers are provided, including film 15, substrate 17 and frame 16.

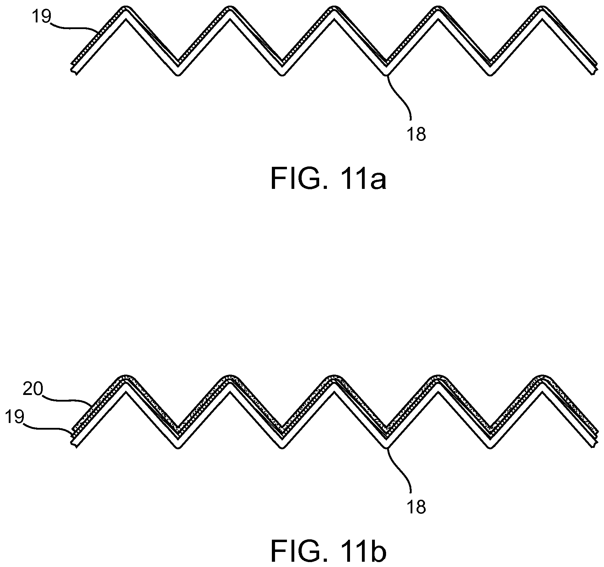

In additional possibilities, such as that shown in FIG. 11a, the rigid or semi-rigid frame 18 can be an aluminum screen mesh formed into a corrugated shape, with a sulfonated block copolymer film 19, laminated thereon. In other embodiments, the screen mesh can be plastic mesh. In either case the frame 18 is sufficiently rigid to maintain its corrugated form. In this manner, the rigid or semi rigid structure can serve as a spacer as well as the membrane through which water can be transported while serving as a barrier to air flow as well. In the embodiment of FIG. 11b, the film 18 can first be bonded onto a substrate 20 and then bonded to the structure 18.

### Convert HRV to ERV

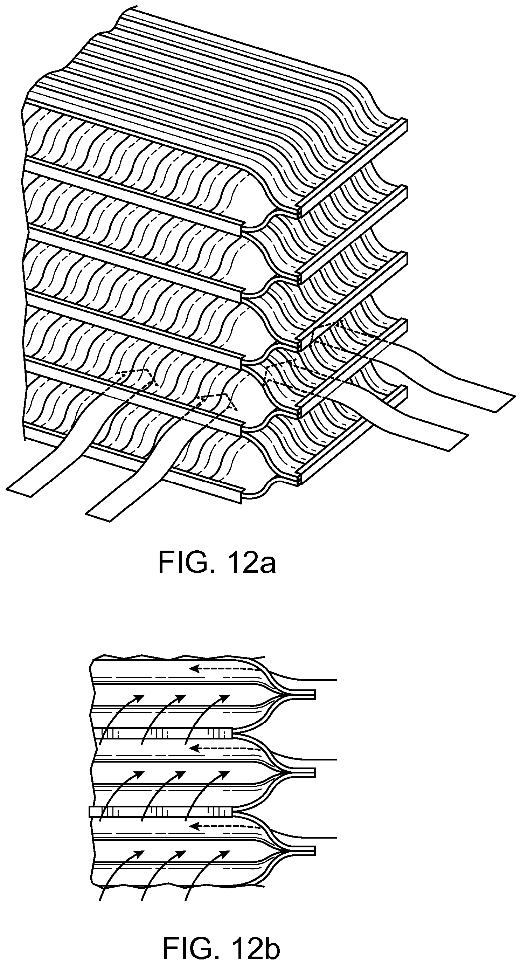

The multilayer structure in FIGS. 11a and 11b can also be employed to convert an HRV system to an ERV system. Existing plate type HRV's are typically constructed of metal (e.g. aluminum), plastics (e.g. polypropylene), or paper for sensible heat recovery only. For HRV systems having a cross flow pattern and stack of corrugated, or spacing plates, such plates could be removed, and thereafter, the corrugated multilayer structures of FIGS. 11a and 11b having a rigid or semi-rigid frame could be inserted, thus forming an ERV core. Due to the rigid or semi-rigid nature of the frame, the multilayer composites can be flat with folded edge, or in a formed shape to allow air passage. Edges can be sealed, for example, by folding or crimping two alternating edges of adjacent layers (FIGS. 12a and 12b) to separate the air streams.

For example, the HRV system in some embodiments is the same as the core in FIG. 5, however there is no moisture transporting layer, and instead is spacers stacked in alternating fashion. Accordingly, when the sulfonated block copolymer laminated frames (multilayer structures such as in FIGS. 11a and 11b) disclosed herein are formed into the same shape as the layers of an HRV core, such layers can be removed from the HRV core and multilayer structures inserted to form an ERV core. No additional spacer would be required.

### Lamination

Lamination may be conducted as known in the art. Generally, the sulfonated block copolymer will be formed into a film, optionally with other components, (hereinafter "polymeric film") and joined with the porous substrate or rigid/semi-rigid structure, or spacer disclosed herein. Multiple methods may be employed for lamination of the polymeric film for attachment or bonding of the polymeric film to the porous substrate. For example, lamination can be conducted by cold lamination or heat (thermal) lamination. Additionally, sonic bonding may be employed for lamination.

Heat lamination is carried out by contacting the polymeric film with the substrate or structure under temperature and pressure thereby forming a bond between the two. The lamination can take place in a vessel such as an oven or other machine or apparatus which enables pressing of the polymeric film and porous substrate together. Generally the temperature ranges from 95° to 450°F, and the pressure can have a range from 100 to 7,000 psi. Residence time, or time subjected to the increased temperature and pressure can be from 30 seconds to 10 minutes. Thereafter, the membrane can be cooled at room temperature and pressure to produce the finalized membrane. Various types of laminating assemblies known in the art can be employed to contact the polymeric film and substrate under heat and pressure. Adhesives may also be used in heat lamination processes. Further, heat activated adhesives may be employed.

One type of heat lamination utilizes a commercial laminator. A laminator can have two or more nip rollers where each roller can be temperature and pressure controlled. A film of the sulfonated block copolymer disclosed herein can be placed on one substrate or structure, or between multiple layers of substrates or structure, and then be placed between the nip rollers thus forming a two or multiply membrane. The typical operating conditions may include temperatures from 150-450°F, pressure from 100-7000 psi and residence time can be adjusted by adjusting the line speed. Temperature, pressure and residence time may be varied to achieve desired laminate bonding.

An additional method of lamination is termed solvent bonding. This can be done under heat or room temperature. In this type of lamination, an organic solvent is applied to the sulfonated block copolymer film. The portion of the sulfonated polymer film contacted with the solvent accordingly softens. The film is then pressed onto the substrate thereby forming a bond between the portions softened by the organic solvent and the substrate. Organic solvents may be used which have the effect of solvating portions of the polymeric film. Such organic solvents include alcohols, alkyls, ketones, acetates, ethers, and aromatic solvents, such as toluene, and benzene.

Another method for lamination is cold lamination, which generally utilizes wet or dry adhesives. While labeled cold, such temperature includes room temperatures. Adhesive lamination is carried out by applying adhesive to one side of the polymeric film and then contacting it with a porous substrate. However, the adhesive should be applied to cover a particular surface area of the substrate and polymeric film so as to minimize blockages which may prevent vapor from passing through. Adhesives may have the effect of blocking certain pores of the substrate, thereby reducing efficiency. Accordingly, with adhesive lamination, it is preferable to minimize the area covered by the adhesive. The adhesive employed can be for example urethane or latex based.

In either cold or heated lamination, laboratory or commercial scale lamination assemblies may also be used for contacting and bonding the polymeric film and substrate to form a laminate. There are many possible configurations for commercial scale lamination, including rollers, presses, the most prevalent in the art being the use of dual, heated pinch rollers.

When contacting the polymeric film with the porous substrate, measures can be taken to ensure that the film will be flat against the porous substrate. For example a lamination apparatus with rollers can be applied across the surfaces to flatten and remove bubbles.

### Illustrative Embodiments

The following examples are intended to be illustrative only, and are not intended to be, nor should they be construed as, limiting the scope of the present invention in any way.

### a. Materials and Methods

Degree of Sulfonation: The degree of sulfonation as described herein and as determined by titration was measured by the following potentiometric titration procedure. The sulfonation reaction product solution was analyzed by two separate titrations (the "two-titration method") to determine the levels of styrenic polymer sulfonic acid, sulfuric acid, and non-polymeric by-product sulfonic acid (2-sulfoisobutyric acid). For each titration, an aliquot of about five (5) grams of the reaction product solution was dissolved in about 100 mL of tetrahydrofuran and about 2 mL of water and about 2 mL of methanol were added. In the first titration, the solution was titrated potentiometrically with 0.1 N cyclohexylamine in methanol to afford two endpoints; the first endpoint corresponded to all sulfonic acid groups in the sample plus the first acidic proton of sulfuric acid, and the second endpoint corresponded to the second acidic proton of sulfuric acid. In the second titration, the solution was titrated potentiometrically with 0.14 N sodium hydroxide in about 3.5:1 methanol: water to afford three endpoints: The first endpoint corresponded to all sulfonic acid groups in the sample plus the first and second acidic proton of sulfuric acid; the second endpoint corresponded to the carboxylic acid of 2-sulfoisobutyric acid; and the third endpoint corresponded to isobutyric acid.

The selective detection the of the second acidic proton of sulfuric acid in the first titration, together with the selective detection of the carboxylic acid of 2-sulfoisobutyric acid in the second titration, allowed for the calculation of acid component concentrations.

The degree of sulfonation as described herein and as determined by 1H-NMR was measured using the following procedure. About two (2) grams of non-neutralized sulfonated polymer product solution was treated with several drops of methanol and the solvent was stripped off by drying in a 50°C vacuum oven for approximately 0.5 hours. A 30 mg sample of the dried polymer was dissolved in about 0.75 mL of tetrahydrofuran-d₈ (THF-d₈), to which was then added with a partial drop of concentrated H₂SO₄ to shift interfering labile proton signals downfield away from aromatic proton signals in subsequent NMR analysis. The resulting solution was analyzed by ¹H-NMR at about 60°C. The percentage styrene sulfonation was calculated from the integration of ¹H-NMR signal at about 7.6 part per million (ppm), which corresponded to one-half of the aromatic protons on sulfonated styrene units; the signals corresponding to the other half of such aromatic protons were overlapped with the signals corresponding to non-sulfonated styrene aromatic protons and tert-butyl styrene aromatic protons.

The ion exchange capacity as described herein was determined by the potentiometric titration method described above and was reported as milliequivalents of sulfonic acid functionality per gram of sulfonated block copolymer.

### b. Experiments

### Preparation of Sulfonated Block Copolymer SBC-1

A pentablock copolymer having the configuration A-D-B-D-A was prepared by sequential anionic polymerization where the A blocks are polymer blocks of para-tert-butylstyrene (ptBS), the D blocks were comprised of polymer blocks of hydrogenated isoprene (Ip), and the B blocks were comprised of polymer blocks of unsubstituted styrene (S). Anionic polymerization of the t-butylstyrene in cyclohexane was initiated using sec-butyllithium affording an A block having a molecular weight of 15,000 g/mol. Isoprene monomers were then added to afford a second block with a molecular weight of 9,000 g/mol (ptBS-Ip-Li). Subsequently, styrene monomer was added to the living (ptBS-Ip-Li) diblock copolymer solution and was polymerized to obtain a living triblock copolymer (ptBS-Ip-S-Li). The polymer styrene block was comprised only of polystyrene having a molecular weight of 28,000 g/mol. To this solution was added another aliquot of isoprene monomer resulting in an isoprene block having a molecular weight of 11,000 g/mol. Accordingly, this afforded a living tetrablock copolymer structure (ptBS-Ip-S-Ip-Li). A second aliquot of para-tert butyl styrene monomer was added, and polymerization thereof was terminated by adding methanol to obtain a ptBS block having a molecular weight of about 14,000 g/mol. The ptBS-Ip-S-Ip-ptBS was then hydrogenated using a standard Co²⁺/triethylaluminum method to remove the C=C unsaturation in the isoprene portion of the pentablock. The block polymer was then sulfonated directly (without further treatment, not oxidizing, washing, nor "finishing") using an ibutyric anhydride/sulfuric acid reagent. The hydrogenated block copolymer solution was diluted to about 10% solids by the addition of heptane (roughly an equal volume of heptane per volume of block copolymer solution). Sufficient i-butyric anhydride and sulfuric acid (1/1 (mol/mol)) were added to afford 2.0 meq of sulfonated polystyrene functionality per g of block copolymer. The sulfonation reaction was terminated by the addition of ethanol (2 mol ethanol/mol of i-butyric anhydride) The resulting polymer was found, by potentiometric titration, to have an "Ion Exchange Capacity (IEC)" of 2.0 meq of -SO₃H/g of polymer. The solution of sulfonated polymer had a solids level of about 10% wt/wt in a mixture of heptane, cyclohexane, and ethyl i-butyrate.

For use of cast films, the compositions as described above were cast against release liner such as siliconized PET film. Films were allowed to gradually dry in the oven controlled by zoned temperatures and air or nitrogen purge for a period of at least 2 minutes until reaching the desired residual solvent level.. No further post-treatments of the film were performed except those specifically required by particular testing procedures. Typical film thicknesses obtained by this procedure range from 5 microns to 50 microns. SBC-1 was cast and formed into films according to this method.

Table 1 demonstrates the comparison between a prototype HRV system and ERV systems using multilayer structure of the present disclosure. In particular, the HRV system of Comparative Example #1 employs an aluminum barrier (i.e. spacer) with no polymeric film or other moisture transporting material. Accordingly only sensible heath is employed.

In ERV system #2, a corrugated aluminum spacer plate is employed with a mesh screen mesh wrapper as the semi-rigid structure and having SBC-1 film laminated thereon. SBC-1 was heat laminated in a press at temperature within 280-350°F range, pressure in the 60-5000 psi heating time of approximately seconds to two minutes. In this example the spacer is not porous and does not allow air or moisture to pass through.

In ERV system #3, the spacer employed is a corrugated screen mesh wrapper and is heat laminated with an SBC-1 film. A screen mesh is also employed as the semi-rigid structure and is heat laminated with an SBC-1 film. The heat lamination took place under the same conditions as in ERV Example #2.

The testing of the sensible and latent heat values were carried out according to Air-Conditioning, Heating and Refrigeration Institute (AHRI) standard 1060.

**Table 1**

| **Examples** | **Core Design** | **Sensible Recovery Efficiency (%)** | **Latent Recovery Efficiency (%)** |
|---|---|---|---|
| Comparative Example #1 | Aluminum HRV comparative example | 32.6 | 0 |
| Example #2 | Corrugated Al Spacer + SBC-1 | 38.1 | 19.2 |
| | Coated Screen Wrapper | | |
| Example #3 | Corrugated SBC-1 Coated Screen spacer+ SBC-1 Coated Screen Wrapper | 46.1 | 30.6 |

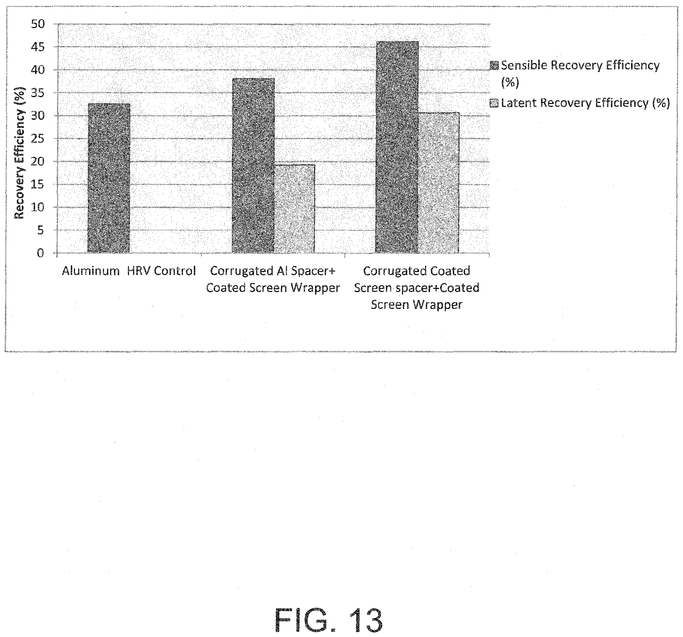

As can be seen from the above table, the ERV Example #2 with the coated screen wrapper has much higher sensible and latent recover efficiency than that of the HRV system of Comparative Example #1. Moreover, as shown by Example #3, employing a Corrugated SBC-1 Coated Screen spacer the efficiency of both sensible heat and latent heat is surprisingly increased significantly. The results are represented in graphical form in FIG. 13.

Taking into account that the invention is defined by the claims, in what follows there is provided a compilation of some embodiments relevant to the invention but not strictly falling under the scope of the invention as defined by the claims:
1. An energy recovery system having a core unit permitting heat and moisture exchange between air streams passing therethrough, said core unit having two or more multilayer composite structures, said multilayer composite structure comprising:
   a porous rigid or semi-rigid frame having a plurality of holes passing from a first surface to a second surface, and
   a polymeric film comprising a sulfonated block copolymer bonded to at least one of said first and second surfaces of said frame covering said plurality holes,
   the sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units.
2. The energy recovery system of embodiment 1 wherein said film is bonded onto a porous substrate comprising a porous woven or non-woven material and thereafter bonded to at least one of said first and second surfaces of said frame to form the multilayer structure.
3. The energy recovery system of embodiment 2, wherein the substrate comprises a porous material selected from the group consisting of carbon, fiberglass, polyester, polyethylene, polyethylene terephthalate, cellulose, cellulose nitrate, cellulose acetate, nylon, polytetrafluoroethylene, Nomex®, Kevlar®, metal and metal alloys such as aluminum.
4. The energy recovery system of embodiment 1 wherein the frame is formed into a continuous shape having channels formed in the surfaces thereof, said channels having a peak and trough.
5. The energy recovery system of embodiment 1 wherein the frame is perforated or sintered to form pores therein.
6. The energy recovery system of embodiment 1 wherein the pore size of said frame is from 0.1 to 200 microns.
7. The energy recovery system of embodiment 1 wherein the pore size of said frame is from 1 to 5 cm.
8. The energy recovery system of embodiment 4 wherein the sulfonated block copolymer is bonded onto a porous substrate comprising a woven or non-woven material and thereafter bonded to the least one of said first and second surfaces of said frame to form the multilayer structure.
9. The energy recovery system of embodiment 8, wherein the substrate comprises a porous material selected from the group consisting of carbon, fiberglass, polyester, polyethylene, polyethylene terephthalate, cellulose, cellulose nitrate, cellulose acetate, nylon, polytetrafluoroethylene, nylon, Nomex®, Kevlar®, metal and metal alloys such as aluminum.
10. The energy recovery system of embodiment 4, wherein a substantially planar second porous frame having a second polymeric film comprising a sulfonated block copolymer bonded thereon is fixed to the peaks of said channels forming a space between said film and the trough of said channels for air flow therethrough.
11. The energy recovery system of embodiment 10 wherein said second film is laminated to a porous substrate comprising a woven or non-woven material and thereafter bonded to at least one of said first and second surfaces of said second porous frame.
12. The energy recovery system of embodiment 1 wherein the frame is a screen mesh.
13. The energy recovery system of embodiment 1 further comprising a plurality of corrugated spacer plates having channels formed in the surfaces thereof, said channels having a peak and trough, and wherein each of said plurality of multilayer structures are fixed on each side of said plurality of corrugated spacer plates.
14. The energy recovery system of embodiment 13, wherein said plurality of multilayer structures are substantially planar.
15. The energy recovery system of embodiment 13, wherein a second film comprising a sulfonated block copolymer is bonded to the surface of said corrugated spacer plate including peak and troughs of said channels such that there is a space in said channels between said third film and said multilayer structures fixed thereto.
16. The energy recovery system of embodiment 15, wherein a second film is laminated to a porous woven or non-woven substrate and subsequently bonded to said surface of said corrugated spacer plate.
17. The energy recovery system of embodiment 14 wherein said corrugated spacer plate is porous, with a plurality of holes passing therethrough.
18. The energy recovery system of embodiment 1, wherein said core has a plurality of said multilayer composite structures stacked one above the other.
19. The energy recovery system of embodiment 18, wherein the multilayer composite structures are stacked in alternating fashion such that the channels formed as a result of corrugation are non-parallel to one another.
20. The energy recovery system of embodiment 1, wherein said film is impervious to the passage of air and permits moisture transfer.
21. The energy recovery system of embodiment 1, wherein
   each A block of the sulfonated block copolymer comprises one or more segments selected from polymerized (i) para-substituted styrene monomers, (ii) ethylene, (iii) alpha olefins of 3 to 18 carbon atoms, (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof.
22. A multilayer composite structure for latent and sensible heat exchange comprising:
   a porous rigid or semi-rigid frame having a plurality of holes passing from a first surface to a second surface, and
   a sulfonated block copolymer film bonded on a least one of said first and second surfaces of said frame covering said plurality holes,
   said sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units.
23. The multilayer composite structure of embodiment 22 wherein said film is laminated to a substrate comprising a porous woven or non-woven material and thereafter bonded to at least one of said first and second surfaces of said frame to form the multilayer structure.
24. The multilayer composite structure of embodiment 23, wherein the substrate comprises a porous material selected from the group consisting of carbon, fiberglass, polyester, polyethylene, polyethylene terephthalate, cellulose, cellulose nitrate, cellulose acetate, nylon, polytetrafluoroethylene, Nomex®, Kevlar®, metal and metal alloys such as aluminum.
25. The multilayer composite structure of embodiment 22, wherein the frame is a perforated substantially planar plate.
26. The multilayer composite structure of embodiment 22 wherein the frame is formed into a shape having channels formed in the surfaces thereof, said channels having a peak and trough.
27. The multilayer composite structure of embodiment 22 wherein
   each A block of the sulfonated block copolymer comprises one or more segments selected from polymerized (i) para-substituted styrene monomers, (ii) ethylene, (iii) alpha olefins of 3 to 18 carbon atoms, (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof
   each B block of the sulfonated block comprises segments of one or more vinyl aromatic monomers selected from polymerized (i) unsubstituted styrene monomers, (ii) ortho-substituted styrene monomers, (iii) meta-substituted styrene monomers, (iv) alpha-methylstyrene, (v) 1,1-diphenylethylene, (vi) 1,2-diphenylethylene and (vii) mixtures thereof.
28. An energy recovery system having a core unit permitting heat and moisture exchange between air streams passing therethrough, comprising:
   a corrugated spacer plate having channels formed in the surfaces thereof, said channels having a peak and trough,
   a substantially planar film comprising a sulfonated block copolymer bonded to the peaks of said channels forming a space between said film and the trough of said channels for air flow therethrough,
   said sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units.
29. An energy recovery system of embodiment 28 wherein said film is bonded to a perforated substantially rigid frame forming a multilayer composite structure and then bonded to said corrugated spacer plate.
30. An energy recovery system of embodiment 29, wherein said film is bonded to a porous woven or non-woven substrate, and subsequently bonded to said substantially rigid frame.
31. An energy recovery system of embodiment 28, wherein said corrugated spacer plate has a plurality of holes.
32. An energy recovery system of embodiment 31 wherein said film is bonded to a perforated substantially rigid frame forming a multilayer composite structure and then bonded to said corrugated spacer plate.
33. An energy recovery system of embodiment 32, wherein said film is bonded to a porous woven or non-woven substrate, and subsequently bonded to said substantially rigid frame.
34. An energy recovery system of embodiment 31, a second film comprising sulfonated block copolymer is bonded to the surface of the channel of said corrugated spacer plate, including peak and trough, forming a space between said second film and said planar polymer film for passage of air streams therethrough.
35. An energy recovery system of embodiment 32, a second film comprising sulfonated block copolymer is bonded to the surface of the channel of said corrugated spacer plate, including peak and trough, forming a space between said second film and said planar polymer film for passage of air streams therethrough.
36. An energy recovery system of embodiment 34, wherein the said second film is bonded to a porous woven or non-woven substrate and subsequently bonded to said surface of the channel of said corrugated spacer plate.
37. An energy recovery system of embodiment 28 wherein
   each A block of the sulfonated block copolymer comprises one or more segments selected from polymerized (i) para-substituted styrene monomers, (ii) ethylene, (iii) alpha olefins of 3 to 18 carbon atoms, (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof
   each B block of the sulfonated block comprises segments of one or more vinyl aromatic monomers selected from polymerized (i) unsubstituted styrene monomers, (ii) ortho-substituted styrene monomers, (iii) meta-substituted styrene monomers, (iv) alpha-methylstyrene, (v) 1,1-diphenylethylene, (vi) 1,2-diphenylethylene and (vii) mixtures thereof.
38. A process for converting a heat recovery ventilation system to an energy recovery system comprising:
   removing a spacer plate from an heat recovery ventilator core,
   inserting a multilayer structure, said multilayer structure comprising:
   a porous rigid or semi-rigid frame having a plurality of holes passing from a first surface to a second surface and formed , and
   a polymeric film comprising a sulfonated block copolymer bonded to at least one of said first and second surfaces of said frame covering said plurality holes,
   the sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units, and
   said multilayer structure being formed into a continuous shape having channels formed in the surfaces thereof, said channels having a peak and trough for permitting airflow therethrough.

## Claims

1. An energy recovery system having a core unit permitting heat and moisture exchange between air streams passing therethrough, said core unit comprising two or more multilayer composite structures, the multilayer composite structure comprising:
a porous rigid or semi-rigid frame (11) having a plurality of holes passing from a first surface to a second surface, and **characterized in that** the multilayer composite structure further comprises a first polymeric film (6) comprising a sulfonated block copolymer bonded to at least one of said first and second surfaces of said frame (11) covering said plurality holes,
a corrugated spacer plate (14) having channels formed in the surfaces thereof, said channels having a peak and trough, and
a second polymeric film (15) comprising a sulfonated block copolymer bonded across the entire surface of said corrugated spacer plate (14), wherein there is a space between said second polymeric film (15) and the trough of said channels for air flow therethrough,
said sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units.

2. The energy recovery system of claim 1 wherein said first polymeric film (6) is bonded onto a porous substrate (12) comprising a porous woven or non-woven material and thereafter bonded to at least one of said first and second surfaces of said frame (11) and wherein said second polymeric film (15) is bonded to a perforated substantially rigid frame (16) and then bonded to said corrugated spacer plate (14) to form the multilayer composite structure.

3. The energy recovery system of claim 2, wherein the substrate (12) comprises a porous material selected from the group consisting of carbon, fiberglass, polyester, polyethylene, polyethylene terephthalate, cellulose, cellulose nitrate, cellulose acetate, nylon, polytetrafluoroethylene, Nomex®, Kevlar®, metal and metal alloys such as aluminum.

4. The energy recovery system of claim 1, wherein said film is impervious to the passage of air and permits moisture transfer.

5. The energy recovery system of claim 1, wherein
each A block of the sulfonated block copolymer comprises one or more segments selected from polymerized (i) para-substituted styrene monomers, (ii) ethylene, (iii) alpha olefins of 3 to 18 carbon atoms, (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof.

6. The energy recovery system of claim 1, wherein said corrugated spacer plate (14) has a plurality of holes.

7. A multilayer composite structure for latent and sensible heat exchange comprising:
a porous rigid or semi-rigid frame (11) having a plurality of holes passing from a first surface to a second surface, and
a first film (6) of a sulfonated block copolymer bonded on a least one of said first and second surfaces of said frame (11) covering said plurality of holes,
a corrugated spacer plate (14) having channels formed in the surfaces thereof, said channels having a peak and trough, and a second film (15) of a sulfonated block copolymer bonded across the entire surface of said corrugated spacer plate, wherein there is a space between said second film and the trough of said channels for air flow therethrough,
said sulfonated block copolymer having at least one end block A and at least one interior block B wherein each A block contains essentially no sulfonic acid or sulfonate ester functional groups and each B block is a polymer block containing from about 10 to about 100 mol percent sulfonic acid or sulfonate ester functional groups based on the number of monomer units.

8. The multilayer composite structure of claim 7, wherein said first film (6) is laminated to a substrate (12) comprising a porous woven or non-woven material and thereafter bonded to at least one of said first and second surfaces of said frame, and said second film (15) is bonded to a perforated substantially rigid frame (16) and then bonded to said corrugated spacer plate, to form the multilayer structure.

9. The multilayer composite structure of claim 8, wherein the substrate comprises a porous material selected from the group consisting of carbon, fiberglass, polyester, polyethylene, polyethylene terephthalate, cellulose, cellulose nitrate, cellulose acetate, nylon, polytetrafluoroethylene, Nomex®, Kevlar®, metal and metal alloys such as aluminum.

10. The multilayer composite structure of claim 7, wherein
each A block of the sulfonated block copolymer comprises one or more segments selected from polymerized (i) para-substituted styrene monomers, (ii) ethylene, (iii) alpha olefins of 3 to 18 carbon atoms, (iv) 1,3-cyclodiene monomers, (v) monomers of conjugated dienes having a vinyl content less than 35 mol percent prior to hydrogenation, (vi) acrylic esters, (vii) methacrylic esters, and (viii) mixtures thereof, and
each B block of the sulfonated block comprises segments of one or more vinyl aromatic monomers selected from polymerized (i) unsubstituted styrene monomers, (ii) ortho-substituted styrene monomers, (iii) meta-substituted styrene monomers, (iv) alpha-methylstyrene, (v) 1,1-diphenylethylene, (vi) 1,2-diphenylethylene and (vii) mixtures thereof.

11. A process for converting a heat recovery ventilation system to an energy recovery system comprising:
removing a spacer plate from an heat recovery ventilator core,
inserting a multilayer as defined in claim 7.

## Patentansprüche

1. Energiewiedergewinnungssystem mit einer Kerneinheit, welche einen Wärme- und Feuchtigkeitsaustausch zwischen durch diese hindurch strömende Luftströmen zulässt, wobei die Kerneinheit zwei oder mehr Mehrschichtverbundwerkstoffstrukturen aufweist, wobei die Mehrschichtverbundwerkstoffstruktur enthält:
einen porösen steifen oder halbsteifen Rahmen (11) mit einer Vielzahl von Löchern, welche sich von einer ersten Oberfläche zu einer zweiten Oberfläche erstrecken, und **dadurch gekennzeichnet, dass** die Mehrschichtverbundwerkstoffstruktur ferner enthält
einen ersten Polymerfilm (6) enthaltend ein sulfoniertes Blockcopolymer gebunden an wenigstens eine der ersten und zweiten Oberflächen des Rahmens (11), welche die Vielzahl von Löchern ummanteln,
eine gewellte Abstandsplatte (14) mit in der Fläche davon gebildeten Kanälen, wobei die Kanäle einen Scheitel und eine Senke aufweisen, und
einen zweiten Polymerfilm (15) enthaltend ein sulfoniertes Blockcopolymer, welcher entlang der gesamten Oberfläche der gewellten Abstandsplatte (14) gebunden ist,
wobei zwischen dem zweiten Polymerfilm (15) und der Senke der Kanäle ein Raum angeordnet ist zum Luftstrom hierdurch,
wobei das sulfonierte Blockcopolymer wenigstens einen Endblock A und wenigstens einen Innenblock B aufweist, wobei jeder A-Block im Wesentlichen keine Sulfonsäure- oder Sulfonatester-funktionelle Gruppen enthält und jeder B-Block ein Polymerblock ist, der zwischen ungefähr 10 und ungefähr 100 Mol-Prozent Sulfonsäure- oder Sulfonatester-funktionelle Gruppen bezogen auf die Anzahl der Monomereinheiten enthält.

2. Energiewiedergewinnungssystem nach Anspruch 1, wobei der erste Polymerfilm (6) an ein poröses Substrat (12) gebunden ist, welches ein poröses gewebtes oder nicht-gewebtes Material enthält, und danach an wenigstens eine der ersten und zweiten Oberflächen des Rahmens (11) gebunden ist, und, wobei der zweite Polymerfilm (15) an einen perforierten im Wesentlichen steifen Rahmen (16) gebunden ist und dann an die gewellte Abstandsplatte (14) gebunden ist, um die Mehrschichtverbundwerkstoffstruktur auszubilden.

3. Energiewiedergewinnungssystem nach Anspruch 2, wobei das Substrat (12) ein poröses Material enthält, welches aus der Gruppe ausgewählt ist, welche besteht aus Kohlenstoff, Faserglas, Polyester, Polyethylen, Polyethylenterephthalat, Cellulose, Cellulosenitrat, Celluloseacetat, Nylon, Nomex®, Kevlar®, Metall und Metalllegierungen, wie Aluminium.

4. Energiewiedergewinnungssystem nach Anspruch 1, wobei der Film gegenüber der Passage von Luft undurchlässig ist und Feuchtigkeitstransfer zulässt.

5. Energiewiedergewinnungssystem nach Anspruch 1, wobei jeder A-Block des sulfonierten Blockcopolymers ein oder mehrere Segmente enthält, welche ausgewählt sind aus polymerisierten (i) para-substituierten Styrolmonomeren, (ii) Ethylen, (iii) Alpha-Olefinen mit drei bis 18 Kohlenstoffatomen, (iv) 1,3-Cyclodienmonomeren, (v) Monomeren von konjugierten Dienen mit einem Vinylgehalt von weniger als 35 Mol-Prozent vor der Hydrierung, (vi) Acrylester, (vii) Methacrylestern und (viii) Mischungen hiervon.

6. Energiewiedergewinnungssystem nach Anspruch 1, wobei die gewellte Abstandsplatte (14) eine Vielzahl von Löchern aufweist.

7. Mehrschichtverbundwerkstoffstruktur für latenten und empfindlichen Wärmeaustausch umfassend:
einen porösen steifen oder halbsteifen Rahmen (11) mit einer Vielzahl von Löchern, welche sich von einer ersten Oberfläche zu einer zweiten Oberfläche erstrecken, und **dadurch gekennzeichnet, dass** die Mehrschichtverbundwerkstoffstruktur ferner enthält,
einen ersten Polymerfilm (6) enthaltend ein sulfoniertes Blockcopolymer gebunden an wenigstens eine der ersten und zweiten Oberflächen des Rahmens (11), welche die Vielzahl von Löchern ummanteln,
eine gewellte Abstandsplatte (14) mit in der Fläche davon gebildeten Kanälen, wobei die Kanäle einen Scheitel und eine Senke aufweisen, und
einen zweiten Polymerfilm (15) aus einem sulfonierten Blockcopolymer gebunden entlang der gesamten Oberfläche der gewellten Abstandsplatte (14),
wobei zwischen dem zweiten Polymerfilm (15) und der Senke der Kanäle ein Raum zum Luftstrom hierdurch angeordnet ist,
wobei das sulfonierte Blockcopolymer wenigstens einen Endblock A und wenigstens einen Innenblock B aufweist, wobei jeder A-Block im Wesentlichen keine Sulfonsäure- oder Sulfonatester-funktionellen Gruppen enthält und jeder B-Block ein Polymerblock ist, der zwischen ungefähr 10 und ungefähr 100 Mol-Prozent Sulfonsäure- oder Sulfonatester-funktionelle Gruppen bezogen auf die Anzahl der Monomereinheiten enthält.

8. Mehrschichtverbundwerkstoffstruktur nach Anspruch 7, wobei der erste Film (6) an ein Substrat (12) laminiert ist, welches ein poröses gewebtes oder nicht-gewebtes Material enthält, und danach an wenigstens eine der ersten und zweiten Oberflächen des Rahmens (11) gebunden ist, und, wobei der zweite Polymerfilm (15) an einen perforierten im Wesentlichen steifen Rahmen (16) gebunden ist und dann an die gewellte Abstandsplatte (14) gebunden ist, um die Mehrschichtverbundwerkstoffstruktur auszubilden.

9. Mehrschichtverbundwerkstoffstruktur nach Anspruch 8, wobei das Substrat (12) ein poröses Material enthält, welches aus der Gruppe ausgewählt ist, welche besteht aus Kohlenstoff, Faserglas, Polyester, Polyethylen, Polyethylenterephthalat, Cellulose, Cellulosenitrat, Celluloseacetat, Nylon, Nomex®, Kevlar®, Metall und Metalllegierungen, wie Aluminium.

10. Mehrschichtverbundwerkstoffstruktur nach Anspruch 7, wobei jeder A-Block des sulfonierten Blockcopolymers ein oder mehrere Segmente enthält, welche ausgewählt sind aus polymerisierten (i) para-substituierten Styrolmonomeren, (ii) Ethylen, (iii) Alpha-Olefinen mit drei bis 18 Kohlenstoffatomen, (iv) 1,3-Cyclodienmonomeren, (v) Monomeren von konjugierten Dienen mit einem Vinylgehalt von weniger als 35 Mol-Prozent vor der Hydrierung, (vi) Acrylestern, (vii) Methacrylestern und (viii) Mischungen hiervon, und
jeder B-Block des sulfonierten Blocks Abschnitte von einem oder mehreren vinylaromatischen Monomeren enthält ausgewählt aus polymerisierten (i) unsubstituierten Styrolmonomeren, (ii) ortho-substituierten Styrolmonomeren, (iii) meta-substituierten Styrolmonomeren, (iv) alpha-Methylstyrol, (v) 1,1-diphenylethylen, (vi) 1,2-Diphylethylen und (vii) Mischungen hiervon.

11. Verfahren zum Umwandeln eines Wärmerückgewinnungsventilationssystems zu einem Energierückgewinnungssystem umfassend:
Entfernen einer Abstandsplatte von einem Wärmewiedergewinnungsventilatorkern,
Einsetzen einer Mehrschicht nach Anspruch 7.

## Revendications

1. Système de récupération d'énergie ayant une unité de coeur permettant un échange de chaleur et d'humidité entre des courants d'air passant à travers elle, ladite unité de coeur comprenant au moins deux structures composites multicouches, la structure composite multicouches comprenant :
un cadre rigide ou semi-rigide poreux (11) ayant une pluralité de trous passant d'une première surface à une seconde surface, et **caractérisé par le fait que** la structure composite multicouches comprend en outre
un premier film polymère (6) comprenant un copolymère séquencé sulfoné lié à au moins l'une desdites première et seconde surfaces dudit cadre (11) recouvrant ladite pluralité de trous,
une plaque espaceur ondulée (14) ayant des canaux formés dans les surfaces de celle-ci, lesdits canaux ayant un point haut et un point bas, et
un second film polymère (15) comprenant un copolymère séquencé sulfoné lié à travers toute la surface de ladite plaque espaceur ondulée (14),
dans lequel il y a un espace entre ledit second film polymère (15) et le point bas desdits canaux pour l'écoulement d'air à travers lui,
ledit copolymère séquencé sulfoné ayant au moins un bloc d'extrémité A et au moins un bloc intérieur B, chaque bloc A ne contenant sensiblement pas de groupes fonctionnels acide sulfonique ou ester sulfonate et chaque bloc B étant un bloc polymère contenant d'environ 10 à environ 100 pour cent en moles de groupes fonctionnels acide sulfonique ou ester sulfonate sur la base du nombre d'unités monomères.

2. Système de récupération d'énergie selon la revendication 1, dans lequel ledit premier film polymère (6) est lié sur un substrat poreux (12) comprenant une matière tissée ou non tissée poreuse et par la suite lié à au moins l'une desdites première et seconde surfaces dudit cadre (11) et dans lequel ledit second film polymère (15) est lié à un cadre sensiblement rigide perforé (16) et ensuite lié à ladite plaque espaceur ondulée (14) pour former la structure composite multicouches.

3. Système de récupération d'énergie selon la revendication 2, dans lequel le substrat (12) comprend une matière poreuse choisie dans le groupe consistant en carbone, fibre de verre, polyester, polyéthylène, poly(téréphtalate d'éthylène), cellulose, nitrate de cellulose, acétate de cellulose, nylon, polytétrafluoroéthylène, Nomex®, Kevlar®, métaux et alliages métalliques tels que l'aluminium.

4. Système de récupération d'énergie selon la revendication 1, dans lequel ledit film est imperméable au passage d'air et permet le transfert d'humidité.

5. Système de récupération d'énergie selon la revendication 1, dans lequel chaque bloc A du copolymère séquencé sulfoné comprend au moins un segment choisi parmi, à l'état polymérisé, (i) les monomères de styrène substitué en para, (ii) l'éthylène, (iii) les alpha oléfines de 3 à 18 atomes de carbone, (iv) les monomères 1,3-cyclodiènes, (v) les monomères de diènes conjugués ayant une teneur en vinyle de moins de 35 pour cent en moles avant hydrogénation, (vi) les esters acryliques, (vii) les esters méthacryliques, et (viii) leurs mélanges.

6. Système de récupération d'énergie selon la revendication 1, dans lequel ladite plaque espaceur ondulée (14) a une pluralité de trous.

7. Structure composite multicouches pour un échange de chaleur latente et sensible comprenant :
un cadre rigide ou semi-rigide poreux (11) ayant une pluralité de trous passant d'une première surface à une seconde surface, et
un premier film (6) d'un copolymère séquencé sulfoné lié sur au moins l'une desdites première et seconde surfaces dudit cadre (11) recouvrant ladite pluralité de trous,
une plaque espaceur ondulée (14) ayant des canaux formés dans les surfaces de celle-ci, lesdits canaux ayant un point haut et un point bas, et un second film (15) d'un copolymère séquencé sulfoné lié à travers toute la surface de ladite plaque espaceur ondulée, dans laquelle il y a un espace entre ledit second film et le point bas desdits canaux pour un écoulement d'air à travers lui,
ledit copolymère séquencé sulfoné ayant au moins un bloc d'extrémité A et au moins un bloc intérieur B, chaque bloc A ne contenant sensiblement pas de groupes fonctionnels acide sulfonique ou ester sulfonate, et chaque bloc B étant un bloc polymère contenant d'environ 10 à environ 100 pour cent en moles de groupes fonctionnels acide sulfonique ou ester sulfonate sur la base du nombre d'unités monomères.

8. Structure composite multicouches selon la revendication 7, dans laquelle ledit premier film (6) est laminé sur un substrat (12) comprenant une matière tissée ou non tissée poreuse et par la suite lié à au moins l'une desdites première et seconde surfaces dudit cadre, et ledit second film (15) est lié à un cadre sensiblement rigide perforé (16) puis lié à ladite plaque espaceur ondulée, pour former la structure multicouches.

9. Structure composite multicouches selon la revendication 8, dans laquelle le substrat comprend une matière poreuse choisie dans le groupe consistant en carbone, fibre de verre, polyester, polyéthylène, poly(téréphtalate d'éthylène), cellulose, nitrate de cellulose, acétate de cellulose, nylon, polytétrafluoroéthylène, Nomex®, Kevlar®, métaux et alliages métalliques tels que l'aluminium.

10. Structure composite multicouches selon la revendication 7, dans laquelle chaque bloc A du copolymère séquencé sulfoné comprend un ou plusieurs segments choisis parmi, à l'état polymérisé, (i) les monomères de styrène substitué en para, (ii) l'éthylène, (iii) les alpha oléfines de 3 à 18 atomes de carbone, (iv) les monomères 1,3-cyclodiènes, (v) les monomères de diènes conjugués ayant une teneur en vinyle de moins de 35 pour cent en moles avant l'hydrogénation, (vi) les esters acryliques, (vii) les esters méthacryliques et (viii) leurs mélanges, et
chaque bloc B du bloc sulfoné comprend des segments d'un ou plusieurs monomères vinyl aromatiques choisis parmi, à l'état polymérisé, (i) les monomères de styrène non substitué, (ii) les monomères de styrène substitué en ortho, (iii) les monomères de styrène substitué méta, (iv) l'alpha-méthylstyrène, (v) le 1,1-diphényléthylène, (vi) le 1,2-diphényléthylène et (vii) leurs mélanges.

11. Procédé pour convertir un système de ventilation à récupération de chaleur en un système de récupération d'énergie comprenant :
retirer une plaque espaceur d'un coeur de ventilateur à récupération de chaleur,
introduire une multicouches telle que définie à la revendication 7.
